# EUROPEAN PATENT SPECIFICATION

(11) **EP 1 386 478 B1**
(45) Date of publication and mention of the grant of the patent: **08.11.2006**
(21) Application number: 03715454.9
(22) Date of filing: 26.03.2003
(51) Int. Cl.: H04N 1/00, B41J 29/02, B41J 2/165

(54) **PRINTING DEVICE**
DRUCKEINRICHTUNG
IMPRIMANTE

(30) Priority: 28.03.2002 JP 2002090322; 29.03.2002 JP 2002093476; 26.07.2002 JP 2002217749
(43) Date of publication of application: 04.02.2004
(60) Divisional application: 06004743.8
(73) Proprietor: Brother Kogyo Kabushiki Kaisha, Nagoya-shi, Aichi-ken 467-8561 (JP)
(72) Inventor: YAMAMOTO, Hideki, c/o BROTHER KOGYO K.K., Nagoya-shi, Aichi 467-8561 (JP); KUSE, Kazutoshi, c/o BROTHER KOGYO K.K., Nagoya-shi, Aichi 467-8561 (JP); FUKUOKA, Mutsuo, c/o BROTHER KOGYO K.K., Nagoya-shi, Aichi 467-8561 (JP); SASA, Masahiko, c/o BROTHER KOGYO K.K., Nagoya-shi, Aichi 467-8561 (JP)
(74) Representative: Hofer, Dorothea
(86) International application number: PCT/JP2003/003768
(87) International publication number: WO 2003/084209

(56) References cited:
- EP-A- 0 271 090
- EP-A- 0 362 897
- EP-A- 0 955 168
- EP-A- 0 991 258
- EP-A- 1 065 060
- EP-A- 1 095 888
- JP-A- 9 083 723
- JP-A- 63 146 657
- JP-A- 2000 085 156
- JP-A- 2003 048 356
- US-A- 4 751 582
- US-A- 5 161 038
- US-A- 6 085 063
- US-A- 6 132 023
- US-A1- 2002 196 481
- US-B1- 6 168 258
- US-B1- 6 174 041
- US-B1- 6 499 841
- PATENT ABSTRACTS OF JAPAN vol. 2000, no. 06, 22 September 2000 (2000-09-22) & JP 2000 085156 A (SEIKO EPSON CORP), 28 March 2000 (2000-03-28)

## Description

### TECHNICAL FIELD

The invention relates to a printing device that is made thin and compact.

### BACKGROUND OF THE INVENTION

A conventional multi-function device typically has a printer function for printing on a recording medium such as paper, a scanner function for reading a document and generating image data, and a facsimile function for sending and receiving image data via a communication line. For example, a conventional multi-function device has a flatbed scanner at the top and an ink-jet printer at the bottom.

With the ink-jet printer at the bottom, a recording medium fed from a feeder driven by a sheet feed motor is transported through the printer, and ink is ejected from a printhead onto the recording medium, and then the recording medium is discharged from a discharge portion to the outside of the multi-function device. The discharge portion is often provided with an output tray to guide the recording medium. A carriage on which the printhead and an ink cartridge are mounted reciprocates to perform printing. The ink cartridge needs to be replaced when the ink in the ink cartridge has run out. To replace the ink cartridge or to fix a paper jam, the scanner is pivoted with respect to the printer while the multi-function device is stopped.

The ink-jet printer is also provided with a maintenance mechanism to maintain print quality. The maintenance mechanism includes a wiper for wiping the head face of the printhead, a cap for sealing a nozzle array of the printhead, and a drive motor for driving the wiper and the cap. In the printer where ink is ejected downward from the printhead, the maintenance mechanism including the drive motor is mounted below the printhead, and the cap is moved vertically by the movement of the carriage and a cam provided in the maintenance mechanism. The scanner on the top is provided with a glass plate on which a document is placed, a document reader that reads the document from the underside of the glass plate, and a drive mechanism for driving the document reader.

A need for more compact and thinner multi-function devices has recently arisen for widespread use of the multi-function devices. However, the printhead and the ink cartridge mounted on the carriage makes it difficult to reduce the height (thickness) of the multi-function device because the scanner, the ink cartridge, and the printhead are inevitably stacked in the height direction. Downsizing the printer is also restricted by the structure of the conventional maintenance mechanism. The cap is moved vertically by various parts overlapping one another, such as a cap block for holding the cap, a holding block for holding the cap block which is movably vertically while engaged with the carriage, and a base for holding the holding block which is movably horizontally. When the drive motor for the maintenance mechanism is provided separately from the sheet feed motor, the drive motor is added to the various parts, thereby making the printer thick.

The multi-function device cannot be made compact only by reducing the size of the components of the ink-jet printer at the bottom. The size of the multi-function device depends on the size of the flatbed scanner. The minimum size of the flatbed scanner is determined by the sizes of the documents to be read, the size of the document reader, the travel of the document reader, and the size of drive mechanism.

From EP 1 095 888 A a printing device can be taken which is embodied as a laser printer. A sheet transport path is provided for transporting a recording sheet. A discharge portion is provided from which the recording sheet can be discharged.

From EP 991 258 a printing device can be taken which includes a scanner for scanning an original. A printing unit has a set of needles for ejection of ink. The printhead and the sheet transport path are provided under the scanner. The discharge portion is provided at the lowest part of the printing device.

The present invention addresses the foregoing problems and has as an object to provide a printing device that is made thin and compact generally arranging its components in a space-saving manner.

This object is solved by a printing device as is claimed in claim 1.

Preferred developments of the invention are given in the dependent claims.

### BRIEF DESCRIPTION OF THE DRAWINGS

Preferred embodiments of the invention will be described in detail with reference to the following figures, in which like elements are labeled with like numbers and in which:
FIG. 1 is a perspective view of a multi-function device according to a first embodiment of the invention;
FIG. 2 is a plan view of a print unit with the cover removed and ink cartridges;
FIG. 3 is a front view of the print unit and the frame;
FIG. 4 is a rear view of the print unit and the frame;
FIG. 5 is a left side view of the print unit and the frame;
FIG. 6 is a right side view of the print unit and the frame;
FIG. 7 is.a perspective view of a print unit frame;
FIG. 8 is a sectional view taken along line VIII-VIII;
FIG. 9 is a plan view of the print unit and the frame;
FIG. 10 is a plan view of the print unit with the cover removed;
FIG. 11 is a plan view of a maintenance mechanism;
FIG. 12 is a perspective view of a multi-function device according to a second embodiment of the invention;
FIG. 13 is a perspective view of an ink-jet printer of the multi-function device according to the second embodiment;
FIG. 14 is a plan view of the ink-jet printer;
FIG. 15 is a schematic plan view showing the layout of main components of the ink-jet printer on a substrate;
FIG. 16 is a perspective view of the substrate of the ink-jet printer;
FIG. 17 is side view of the multi-function device according to the second embodiment;
FIG. 18 is a perspective view of a multi-function device according to a third embodiment of the invention;
FIG. 19 is a perspective view of an ink-jet printer of the multi-function device according to the third embodiment;
FIG. 20 is a side view of the multi-function device according to the third embodiment;
FIG. 21 is a side view of the multi-function device according to the third embodiment;
FIG. 22 is a schematic plan view showing the layout of main components of the multi-function device according to the third embodiment; and
FIG. 23 is a schematic front view showing the layout of main components of the multi-function device according to the third embodiment.

### BEST MODE FOR CARRYING OUT THE INVENTION

Preferred embodiments of the invention will be described with reference to the accompanying drawings. Multi-function devices incorporating the invention and having ink-jet printing, scanning, and facsimile functions will be described herein by way of example. Throughout the embodiments, the front refers to a downstream side with respect to a sheet transport direction in an ink-jet printer of a multi-function device, and the rear refers to an upstream side thereof. The right refers to a right side of the multi-function device when viewed from the front, and the left refers to a left side of the multi-function device when viewed from the front.

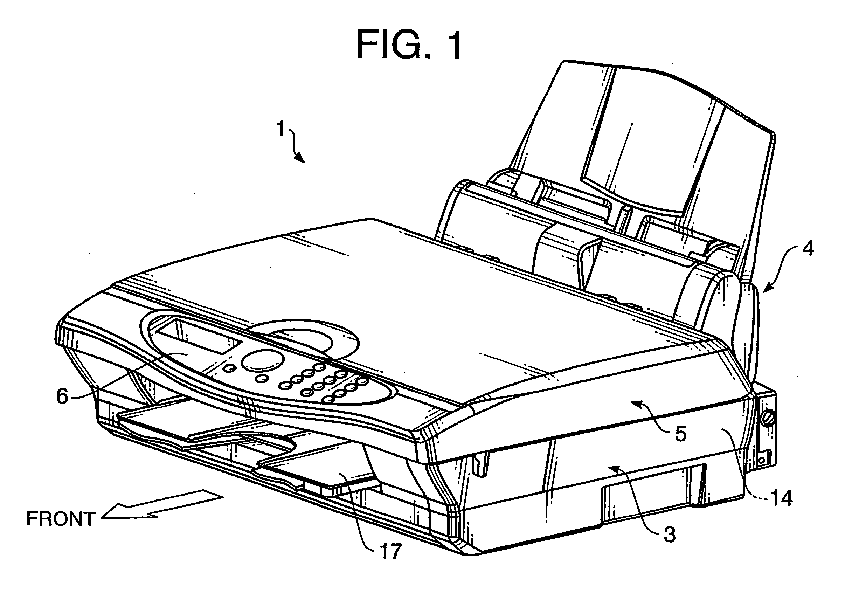

FIG. 1 is a perspective view of a multi-function device 1 according to a first embodiment of the invention. A sheet feed mechanism 4 is provided at the rear of an ink-jet printer 3, and a print unit 14 is provided in front of a lower part of the sheet feed mechanism 4. An output tray 17 is provided in front of the print unit 14. A scanner 5 is provided on the ink-jet printer 3, and an operation panel 6 is provided at the front top of the scanner 5. A control unit (not shown) that controls operation of the multi-function device 1 is provided under the ink-jet printer 3, and a handset (not shown) is provided on the left side of the ink-jet printer 3 and the scanner 5.

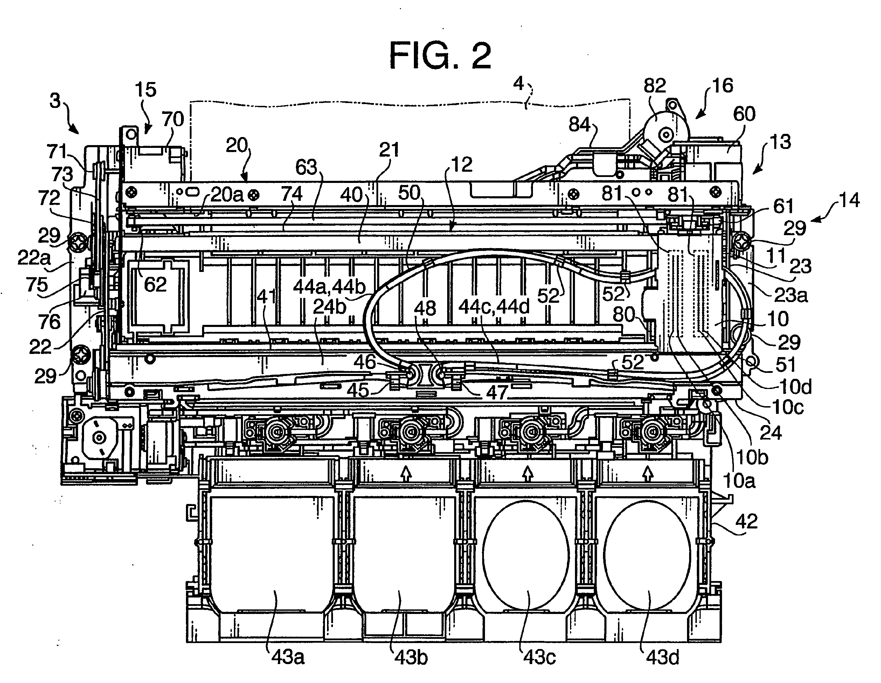

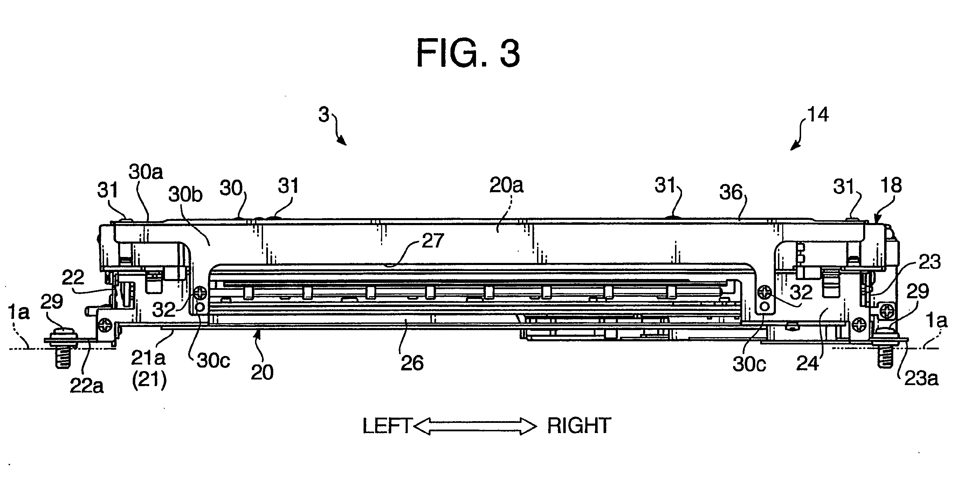

The structure of the ink-jet printer 3 will now be described. As shown in FIGS. 2 through 6, the ink-jet printer 3 includes a printhead 10, a carriage 11 on which the printhead 10 is mounted, a guide mechanism 12 that guides and supports the carriage movably in the right-left direction, that is, in the scanning direction, a carriage moving mechanism 13 that moves the carriage in the right-left direction, a sheet feed mechanism 4 that feeds recording sheets, a sheet transport mechanism 15 that transports recording sheets for printing thereon, and a maintenance mechanism 16 for the printhead 10.

The print unit 14 includes the printhead 10, the carriage 11, guide mechanism 12, carriage moving mechanism 13, sheet transport mechanism 15, and a print unit frame 18 that is shaped like a flat box longer in the right-left direction and shorter in the vertical direction. The devices 10-13 and 15 are housed in the frame 18. The sheet feed mechanism 4 is disposed at the rear of the print unit 14, and the maintenance mechanism 16 is disposed at the bottom right of the print unit 14.

As shown in FIGS. 2-10, the print unit frame 18 has a metal frame 20 with an upper opening 20a and a metal cover 30 fixed to the frame 20 to cover the opening 20a. The guide mechanism 12, the carriage moving mechanism 13, and the sheet transport mechanism 15 are mounted on the frame 20, and printing is performed by the printhead 10 in the frame 20. The cover 30 is formed with an opening 35 that permits access to the sheet in the frame 20.

The frame 20 has a main frame 21 made up of a bottom panel 21a and a rear panel 21b, a pair of side frames 22, 23, and a front frame 24. The main, side, and front frames 21-24 are connected using screws or the like. Lower horizontal portions 22a, 23a of the side frames 22, 23, respectively, are fixed using a pair of screws 29 to a frame mounting portion 1a of the multi-function device 1.

The cover 30 has a top panel 30a formed with the opening 35 and a gate-shaped front panel 30b. The top panel 30a of the cover 30 is fixed to at least the upper end of the rear panel 21b of the main frame 21 using screws 31. A pair of clamp pieces 30c of the front panel 30b of the cover 30 contact the front frame 24 from the front side and are fixed thereto using a pair of screws 32.

A sheet guide slit 25 slightly wider than an A4-size sheet is formed in the rear panel 21b of the main frame 21, and a sheet discharge slit 26 slightly wider than an A4-size sheet is formed in the front frame 24. A sheet passing slit 27 slightly larger than the sheet discharge slit 26 is formed in the front panel 30b of the cover 30, ahead of the sheet discharge slit 26.

A sheet fed by the sheet feed mechanism 4 is guided from the sheet guide slit 25 into the frame 20, transported forward by the sheet transport mechanism 15 having a feed roller 74, and is discharged from the sheet discharge slit 26 and the sheet passing slit 27 to the output tray 17. The sheet is transported to pass under the printhead 10 in the frame 20, and the printhead 10 ejects ink downward onto the sheet to perform printing.

As shown in FIGS. 2, 9 and 10, the guide mechanism 12 has a guide shaft 40 disposed in the right-left direction and connected, at its right and left ends, to the side frames 22, 23, and another guide rail 41 disposed in the right-left direction at the front of the frame 20. The guide rail 41 is formed by a front end of a horizontal portion 24b that is folded rearward from the top of the front frame 24. The rear end of the carriage 11 is slidably fitted onto the guide shaft 40, and the front end of the printhead 10 mounted on the carriage 11 is slidably engaged in the guide rail 41.

Four nozzle arrays 10a-10d are provided in the printhead 10 to face downward, and inks of four colors (black, cyan, yellow, and magenta) are ejected downward onto the sheet for color printing. As shown in FIG. 2, a cartridge mount 42 is provided under the output tray 17 external to the print unit 14, and inks of four colors are supplied to the printhead 10 from ink cartridges 43a-43d mounted on the cartridge mount 42 through four flexible ink tubes 44a-44d.

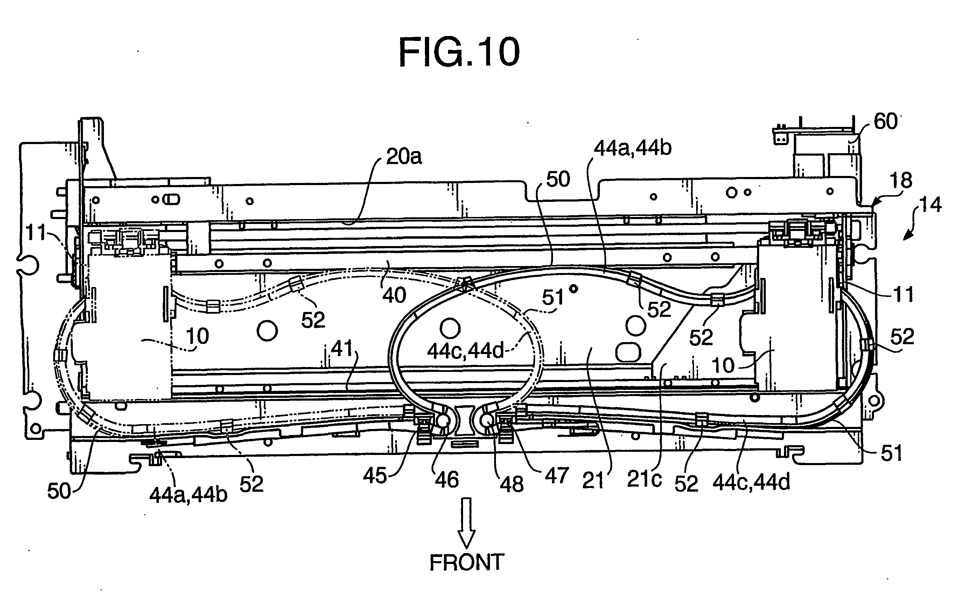

As shown in FIGS. 2 and 10, the two ink tubes 44a, 44b extending from the two cartridges 43a, 43b on the left side are guided into the frame 20 from the left side of the frame 20, and secured to a lock 45 substantially at the center in the right-left direction of the horizontal portion 24b of the front frame 24. The ink tubes 44a, 44b extend from the lock 45 to the printhead 10 while being curved convexedly to the left.

Symmetrically to the ink tubes 44a, 44b, the two ink tubes 44c, 44d extend from the two cartridges 43c, 43d on the right side and are guided into the frame 20 from the right side of the frame 20, and secured to a lock 47 substantially at the center in the right-left direction of the horizontal portion 24b of the front frame 24. The ink tube 44c, 44d extend from the lock 47 to the printhead 10 while being curved convexedly to the right.

As shown in FIGS. 2 and 10, two FPCs (flexible printed circuits) 50, 51 extend horizontally and are connected to the printhead 10. The left-side FPC 50 is secured in the middle to a lock 46 provided near the lock 45 and extends from the lock 46 to the printhead 10 along the two ink tubes 44a, 44b while being curved convexedly to the left.

The right-side FPC 51 is secured in the middle to a lock 48 provided near the lock 47 and extends from the lock 48 to the printhead 10 along the two ink tubes 44c, 44d while being curved convexedly to the right. These FPCs 50, 51 extend from the control unit (not shown) disposed under the print unit frame 18 and are guided into the print unit frame 18. The FPCs 50, 51 have control signal lines that are electrically connected to the control unit and the printhead 10.

As shown in FIGS. 2, 10, a plurality of tube holders 52 made of synthetic resin are detachably attached to several portions of the FPCs 50, 51. The two ink tubes 44a, 44b or 44c, 44d are held one on the other by the tube holders 52. The two ink tubes 44a, 44b or 44c, 44d are bundled with the FPC 50 or 51 and extend from the lock 46 or 48 to the printhead 10.

As shown in FIGS. 2, 4 and 6, the carriage moving mechanism 13 includes a carriage motor 60, a driving pulley 61 rotated by the carriage motor 60, a driven pulley 62 rotatably supported at the left end of the rear panel 21b, and a belt 63 attached around the pulleys 61, 62 and fixed to the carriage 11. The carriage motor 60 is attached to the right end of the rear panel 21b with its shaft directed forward and without extending from the upper and lower ends of the frame 20.

A shown in FIGS, 2, 4 and 5, the sheet transport mechanism 15 includes a sheet feed motor 70, a driving pulley 71 rotated by the sheet feed motor 70, a driven pulley 72 disposed on the left side of the side frame 22, a belt 73 attached around the pulleys 71, 72, and a feed roller 74 operably connected to the driven pulley 72. The sheet feed motor 70 is attached to the rear right side of the side frame 22 with its shaft directed leftward and without extending from the upper and lower ends of the frame 20. The feed roller 74 is disposed in the right-left direction under the guide shaft 40 in the frame 20 and rotatably supported by the side frames 22, 23. An encoder disk 75 is fixed to the driven pulley 72 and a photointerrupter 76 is attached to the side frame 22 to sandwich the encoder disk 75.

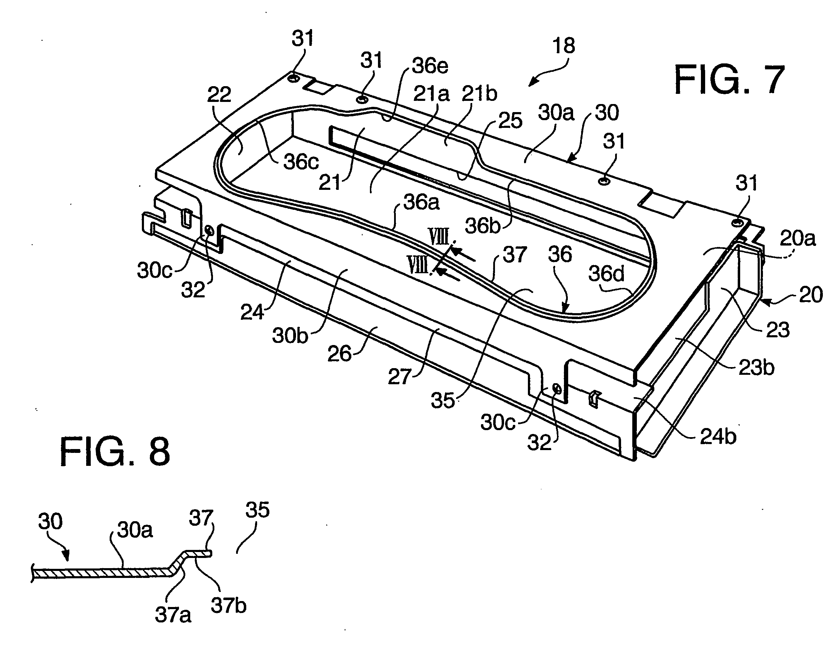

As shown in FIGS. 7-9, an edge 36 of the opening 35 includes a front edge 36a, a rear edge 36b, a left edge 36c, and a right edge 36d, and a rear edge recess 36e is formed at the left portion of the rear edge 36b. The right and left edges of the opening 35 are curved substantially along the curbed shapes of the ink tubes 44a, 44b and 44c, 44d disposed close to the edge 36 of the opening 35.

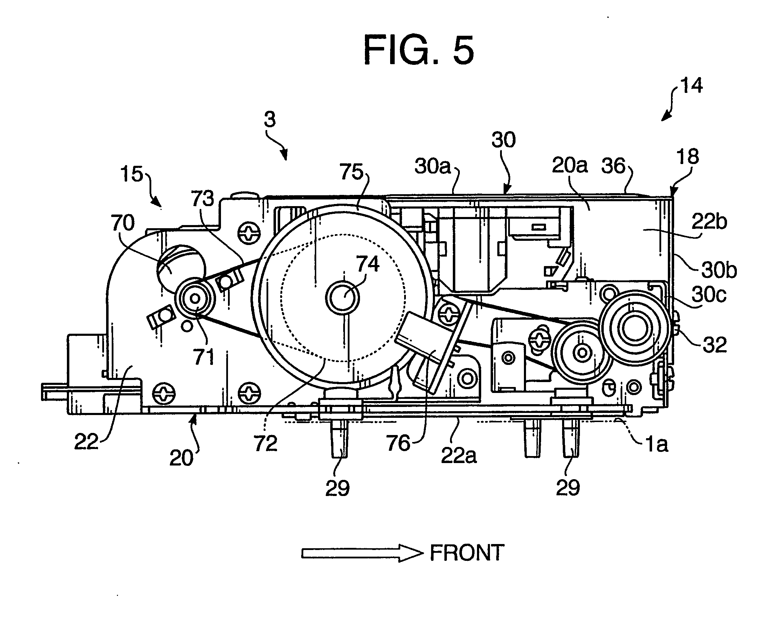

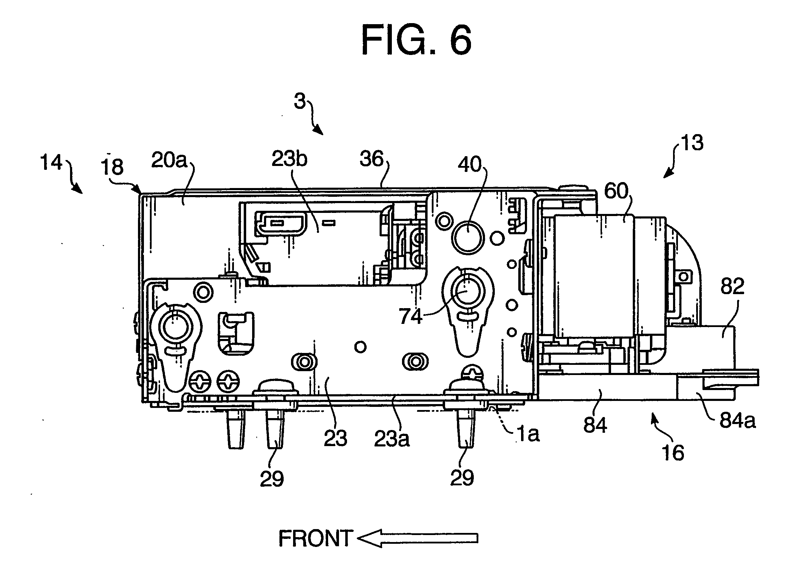

As shown in FIG. 10, when the printhead 10 and the carriage 11 moves to the right or left limit, the ink tubes 44a, 44b and the FPC 50 or the ink tubes 44c, 44d and the FPC 51 protrude from the right or left side frame 22, 23. To allow such protrusion, the side frames 22, 23 are stepped to form openings 22b, 23b between the side frames 22, 23 and the cover 30, as shown in FIGS. 5 and 6.

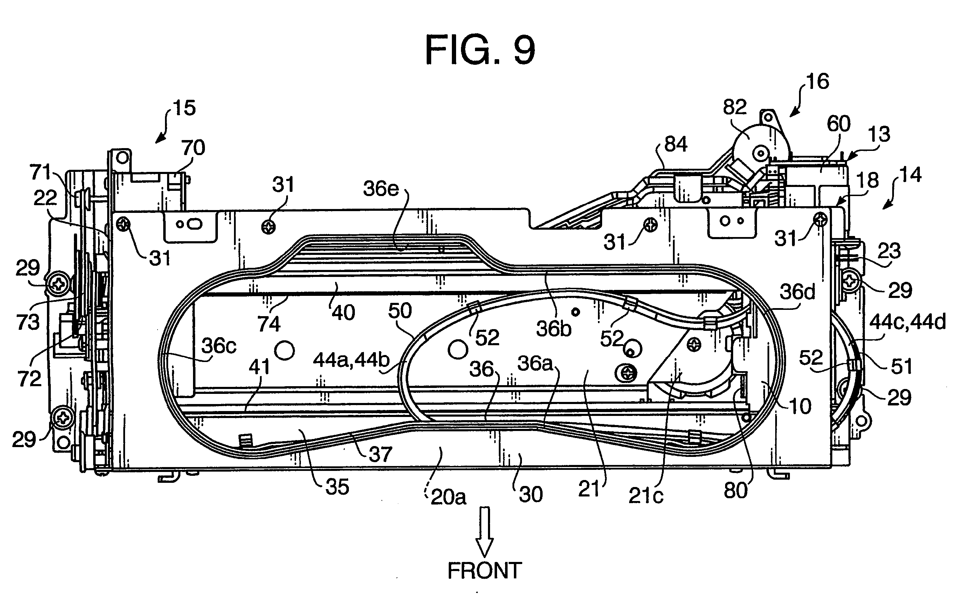

As shown in FIGS. 7 and 9, a guide 37 is provided at the edge 36 of the opening 35 of the cover 30 to guide the tubes 44a-44d and the FPCs 50, 51 downward and prevent them from protruding upward from the opening 35 when the carriage 11 moves in the right-left direction.

As shown in FIG. 8, the guide 37 has an inclined portion 37a that is inclined upward to the opening 35 of the cover 30, a horizontal step-up portion 37b that extends from the inclined portion to the opening 35. The guide 37 is formed along the circumference of the edge 36 to taper upward. Thus, the guide 37 serves as a guide, as described above, and a reinforcement that strengthens the cover 30 and ultimately the print unit frame 18. The front edge 36a of the opening 35 slightly extends rearward at the center in the right-left direction, and this extending portion is positioned over the locks 45, 47 of the ink tubes 44a-44d and the locks 46, 48 of the FPCs 50, 51.

As shown in FIGS. 2, 4, 6, 9 and 11, the maintenance mechanism 16 includes a wiper 80 that wipes the head face of the printhead 10, two caps 81 each of which seals two of the four nozzle arrays 10a-10d, a drive motor 82 that drives the wiper 80 and the caps 81, and a mounting plate 84 on which the wiper 80, caps 81, and drive motor 82 are mounted. The wiper 80 and the two caps 81 are disposed side by side in the right-left direction near the bottom of the frame 20, and mounted vertically movably on the mounting plate 84. The drive motor 82 is disposed externally to the rear side of the frame 20 with its axis directed vertically and without extending from the upper and lower ends of the frame 20.

As shown in FIGS. 9 and 10, an opening 21c is formed in the bottom panel 21a of the frame 20 at a position (on the right) corresponding to the maintenance mechanism 16. When the mounting plate 84 is fixed to the bottom panel 21a, the mounting plate 84 covers the opening 21c and the wiper 80 and the caps 81 mounted on the mounting plate 84 project from the opening 21c to the vicinity of the bottom of the frame 20.

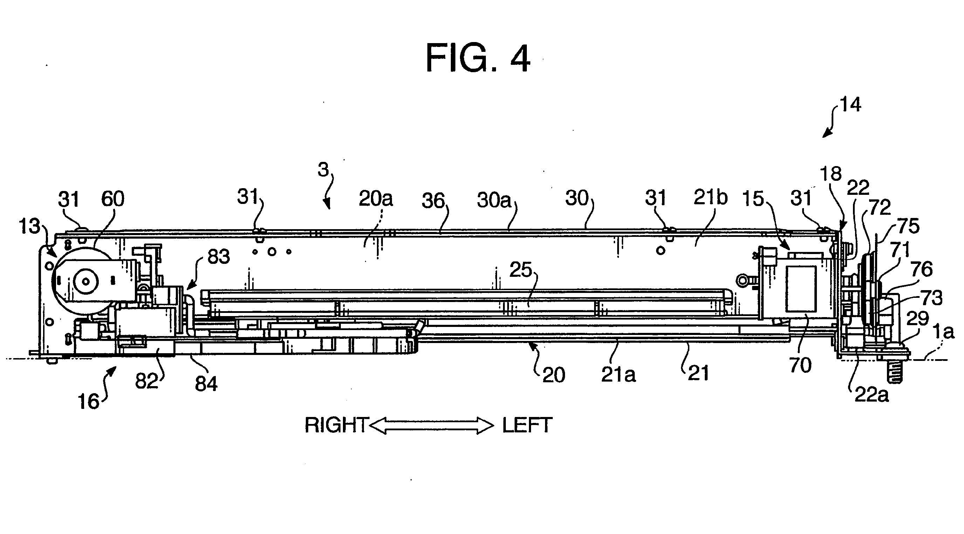

As shown in FIGS. 2, 5 and 6, the sheet feed mechanism 4, which is smaller in width than the frame 20, is disposed at the rear side of the frame 20. The sheet feed motor 70 of the sheet transport mechanism 15 is disposed on the left side of the sheet feed mechanism 4, while the carriage motor 60 of the carriage moving mechanism 13 is disposed on the right side of the sheet feed mechanism 4. The sheet feed motor 70 and the carriage motor 60 are attached to the rear of the frame 20. The drive motor 82 of the maintenance mechanism 16 is disposed near the carriage motor 60 such that they partially overlap each other in the height direction, as shown in FIG. 4.

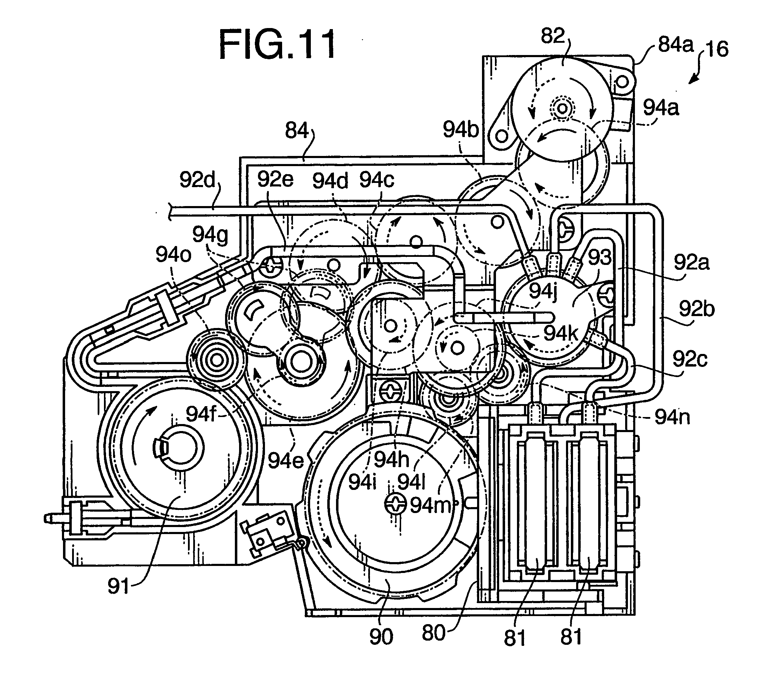

As shown in FIG. 11, the maintenance mechanism 16 includes a cam 90 linked with the wiper 80 and the caps 81, a suction pump 91 that sucks ink, suction tubes 92a-92d that extend from the wiper 80, caps 81 and an ink receiver (not shown) to the suction pump 91 via a suction tube 92e, a suction switching mechanism 93 that selectively connects one of the suction tubes 92a-92d to the suction tube 92e, a cam drive system having gears 94a-94l that transmit a driving force from the drive motor 82 to the cam 90, a pump drive system having gears 94a-94g, 94o that transmit a driving force from the drive motor 82 to the suction pump 91, and a suction switching drive system having gears 94a-94n that transmit a driving force from the drive motor 82 to the suction switching mechanism 93. The wiper 80, caps 81 and drive motor 82 are mounted on the mounting plate 84 together with the cam 90, suction pump 91, suction tubes 92a-92e, suction switching mechanism 93, and gears 94a-94o to form the maintenance mechanism 16 as a unit.

The cam 90, suction pump 91, suction tubes 92a-92e, suction switching mechanism 93, and gears 94a-94o are disposed to have a small dimension vertically, and most of them are placed at the bottom of the frame 20 when the mounting plate 84 is fixed to the frame 20. The gears 94e-94g constitute a planetary gear train, and the swing gear 94g meshes with the gear 94f or 94o to actuate the cam 90, the suction switching mechanism 93, or actuate the suction pump 91.

When the drive motor 82 is driven, the caps 81 ascend and hermetically seal the nozzle arrays 10a-10d from below to prevent drying of ink when the printhead 10 is stopped at its home position (right limit). In this state, the printhead 10 is cleaned by sucking hardened ink and minute foreign substances through the nozzles 10a-10d. Thereafter, the wiper 80 is lifted and the printhead 10 is moved such that the wiper 80 wipes the head face to remove the ink deposited thereon during cleaning.

In the ink-jet printer 3, the nozzle arrays 10a-10d are disposed to face downward, and the printhead 10 ejects ink downward onto the sheet. The wiper 80 and the caps 81 are disposed at a lower part of the frame 20, while the drive motor 82 is disposed externally to the rear of the frame 20 in the plan view of the print unit 14 without extending from the upper and lower ends of the frame 20. The space behind the frame 20 is effectively used to mount the drive motor 82, thereby reducing the vertical dimensions of the frame 20 and the maintenance mechanism 16.

In addition, because the drive motor 82 is disposed with its shaft directed vertically, a power transmitting mechanism that includes a plurality of gears 94a-94d and transmits a driving force of the drive motor 82 to the wiper 80 and the caps 81 are made vertically thin. Further, the ink cartridges 43a-43d for supplying ink to the printhead 10 are mounted outside the print unit 14. Thus, the vertical dimensions of the frame 20 and the maintenance mechanism 16 are reduced, and the printer 3 is made as compact as possible vertically.

The opening 21c is formed in the bottom panel 21a of the frame 20 at a position corresponding to the maintenance mechanism 16. The maintenance mechanism 16 has a mounting plate 84 fixed to the lower surface of the bottom panel 21a, and the drive motor 82 is mounted on a portion 84a of the mounting plate 84 that extends rearward from the frame 20. The drive motor 82 can be easily and reliably mounted on the extending portion externally to the rear of the frame 20 with its shaft directed vertically in the plan view of the print unit 14. Through the opening 20c, the wiper 80 is positioned so as to wipe the head face of the printhead 10 and the caps 81 are positioned so as to seal the nozzle arrays 10a-10d.

The wiper 80, caps 81, drive motor 82, cam 90, suction pump 91, suction tubes 92a-92e, suction switching mechanism 93, and gears 94a-94o are mounted on the mounting plate 84 to form the maintenance mechanism 16 as a unit. The maintenance mechanism 16 is made compact and thus easily assembled to the print unit 14 by fixing the mounting plate 84 to the bottom panel 21a. Because the wiper 80 and the caps 81 are designed to project from the opening 21c to the vicinity of the bottom of the frame 20, they can be positioned properly with respect to the printhead 10 in the frame 20.

The sheet feed mechanism 4, which is smaller in width than the frame 20, is disposed at the rear of the frame 20. The sheet feed motor 70 of the sheet transport mechanism 15 is disposed on the left side of the sheet feed mechanism 4, while the carriage motor 60 of the carriage moving mechanism 13 is disposed on the right side of the sheet feed mechanism 4. The sheet feed motor 70 and the carriage motor 60 are attached to the rear of the frame 20. The drive motor 82 of the maintenance mechanism 16 is disposed near the carriage motor 60 such that they partially overlap each other in the height direction, as shown in FIG. 4. By effectively using the space on both sides of the sheet feed mechanism 4 at the rear of the frame 20, the printer 3 is made compact vertically as well as horizontally.

The drive motor 82 of the maintenance mechanism 16 may be disposed externally to the front or right side of the frame 20, instead of externally to the near of the frame 20, with its shaft directed vertically and without extending from the upper and lower ends of the frame 20. In this case, the mounting plate 84 is designed to extend frontward or rightward from the frame 20 to allow the drive motor 82 to be mounted on the extending portion.

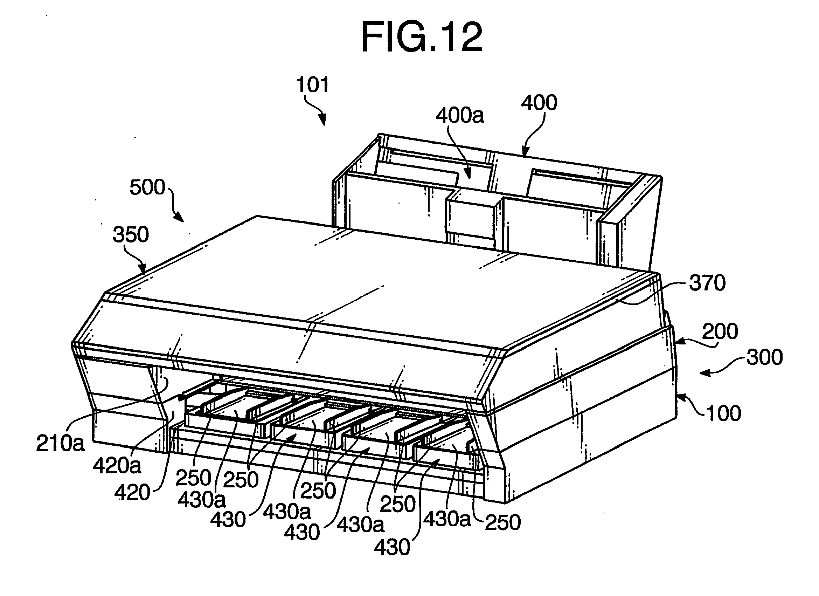

FIG. 12 is a perspective view of a multi-function device 101 according to a second embodiment of the invention. As shown in FIG. 12, the multi-function device 101 is box-shaped and includes a flatbed scanner 500 with a flatbed reader 350 and an ink-jet printer 300 disposed directly under the scanner 500. Specifically, in FIG. 12, the multi-function device 101 is box-shaped and longer in the right-left direction than in the front-rear direction, and shorter in the vertical direction than in the right-left direction. A sheet feed tray 400 for feeding recording sheets (not shown) into the ink-jet printer 300 is open upward and disposed at the rear of the multi-function device 101.

The scanner 500 at the top of the multi-function device 101 is rectangular in the plan view and has the flatbed reader 350. A bearing (not shown) is provided at a lower part of the rear of the flatbed reader 350 so as to be fitted into hinges 220 on a cover 200. The flatbed reader 350 pivots about the bearing fitted into the hinges 220 with respect to the ink-jet printer 300.

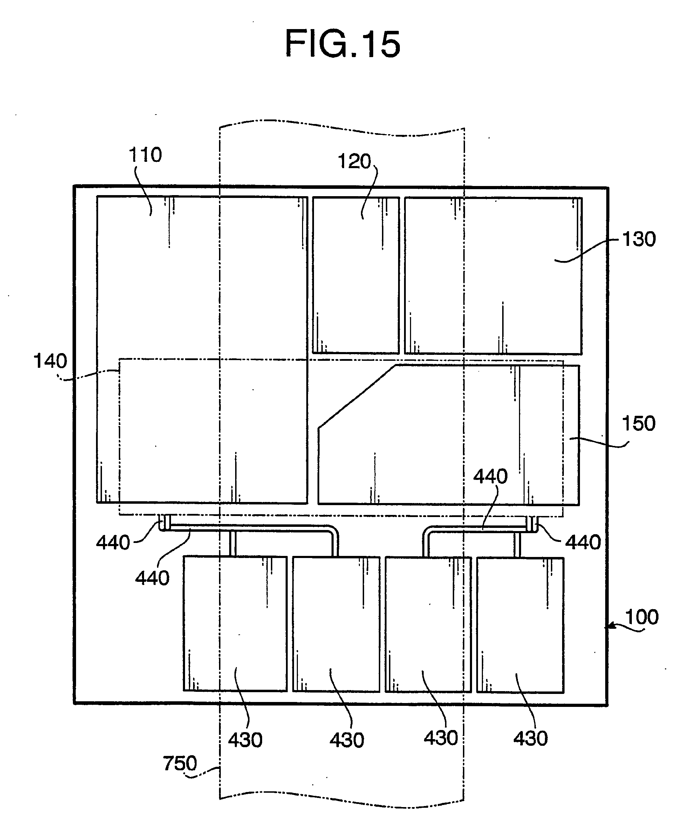

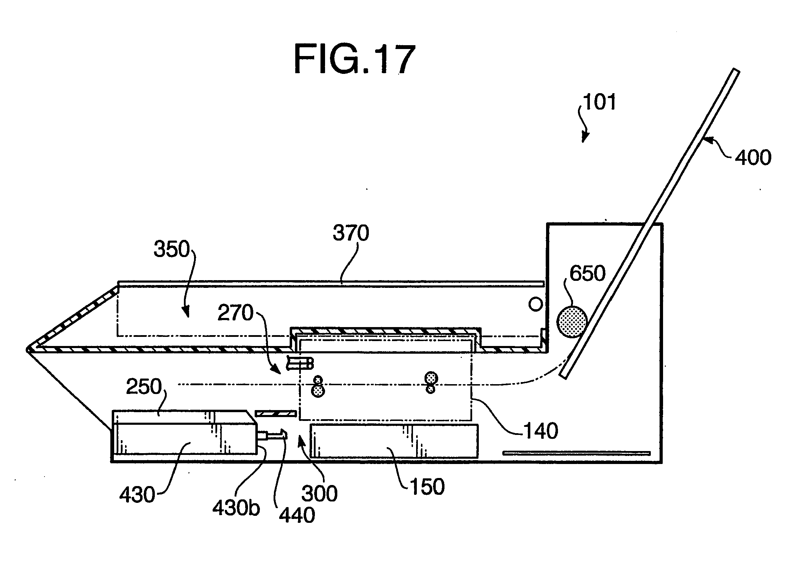

The ink-jet printer 300 disposed directly under the scanner 500 includes a substrate 100 on which various boards and a print unit 140 are mounted, and a cover 20 that covers the various boards and the print unit 140. The print unit 140 has substantially the same structure as the print unit 14 of the first embodiment. The substrate 100 has a cartridge mount 420 on which four ink cartridges 430 storing ink are mounted at the front of the multi-function device 101. The four ink cartridges 430 are inserted from the front to the rear of the multi-function device 101, and each ink cartridge 430 has a thin box shape elongated in the insertion direction. Yellow, magenta, cyan, and black inks are stored in these four ink cartridges 430. The ink cartridges 430 are placed side by side horizontally and substantially level with one another, and removable from the front of the multi-function device 101. As shown in FIG. 17, an ink needle (not shown) connected to a tube 440 (FIG. 15) is inserted into a rear face of each ink cartridge 430, and ink is supplied to a printhead (not shown) through the tube 440.

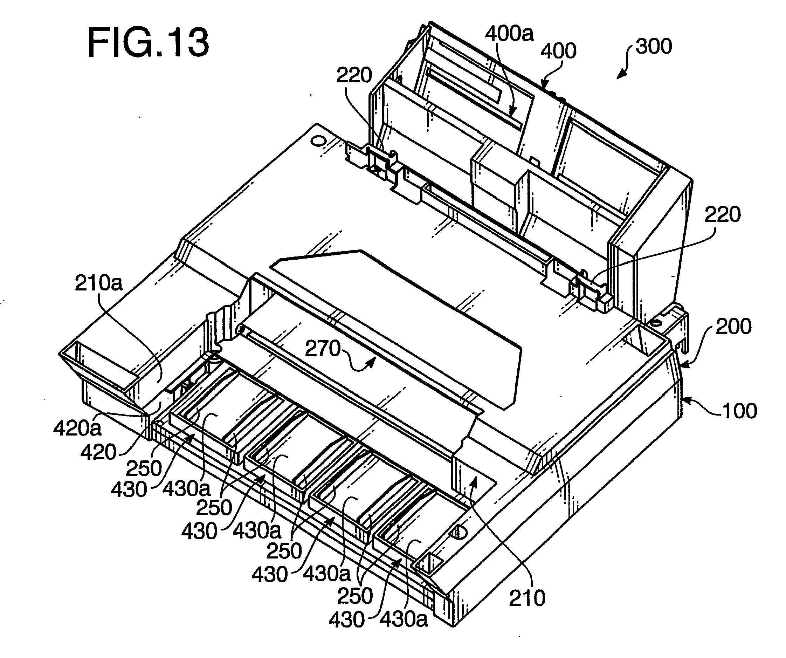

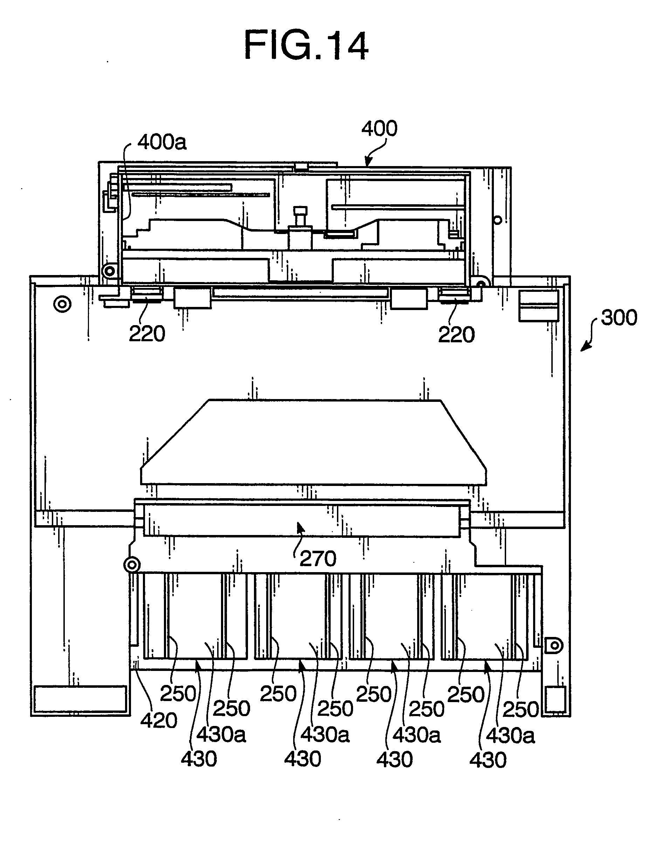

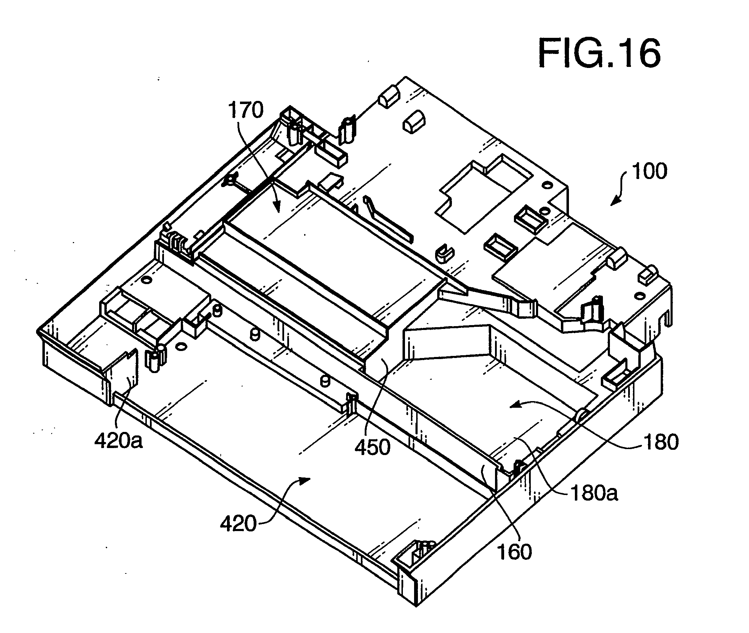

The structure of the ink-jet printer 300 will now be described with reference to FIGS. 13 through 16. FIG. 13 is a perspective view of the multi-function device 101 with the scanner 500 removed, and FIG. 14 is a plan view thereof. FIG. 15 is a plan view showing the layout of main components of the printer 300 on the substrate 100. FIG. 16 is a perspective view of the substrate on which the components of the printer 300 are mounted. As shown in FIGS. 13 and 14, when the scanner 500 is removed from the multi-function device 101, a discharge portion 270 from which a sheet fed into the printer 3 is discharged and the four ink cartridges 430 disposed under the discharge portion 270 are exposed. The printer 300 has the cartridge mount 420, the substrate 100 on which the components of the printer 300 are mounted, and the cover 200 disposed over the substrate 100 to cover the components.

A sheet feed tray 400 for feeding sheets is provided at the rear of the printer 3. The sheet feed tray 400 has an opening 400a that is open upward to hold sheets at an angle. The sheet feed tray 400 has a sheet feed roller 650 that feeds sheets into the printer 300. Although no output tray is provided near the discharge portion 270, ribs 250 formed on the upper surface of the ink cartridges 430 serve as an output tray. The ribs 250 project upward from the upper surfaces 430a of the ink cartridges 430 to the discharge portion 270. The ribs 250 are shaped like rectangular plates extending in the insertion direction of the ink cartridges 430. A pair of ribs 250 are formed at edges of each ink cartridge 430 that are opposed in a direction perpendicular to the insertion direction. Upstream portions of the ribs 250 with respect to the sheet transport direction are partially chamfered such that sheets are smoothly guided onto the ribs 250 and held thereon.

The cover 200 has a cut-away portion 210 shaped like an angular C and has three walls defined by the periphery of the cut-away portion 210. The wall facing toward the rear of the printer 3 is formed with the discharge portion 270 from which sheets are discharged. The left wall 210a and the right wall (invisible) defined on the left and right of the cut-away portion 210 continue to a left wall 420a and a right wall (invisible) that stand upward from the left and right edges of the cartridge mount 420. A pair of hinges 220 are provided at the rear edge of the cover 200 so as to be fitted around the bearing (not shown) of the scanner 500.

As shown in FIG. 16, the substrate 100 is box-shaped and substantially square in the plan view, and has the cartridge mount 420 that is stepped down from the surroundings and positioned at the front of the printer 3. The cartridge mount 420 has a rectangular shape and extends by about one third the dimension of the substrate 100 in the front-rear direction and extends across the substrate 100 in the right-left direction. The left wall 420a and the right wall (invisible) stand upward from the left and right edges of the cartridge mount 420.

Behind the cartridge mount 420, a print unit mount 170 and an absorber mount 180 are formed on the substrate 100. A main board 110 that controls an operation of the multi-function device 101 is mounted internally under the print unit mount 170, and the print unit 140 is mounted on the print unit mount 170. A waste ink absorber 150 (FIG. 15) that absorbs ink waste produced from the ink supplied from the ink cartridges 430 to the printheads is mounted on the absorber mount 180. The ink waste refers to the ink sucked from the printhead by purging or the ink discharged from the printhead by flushing. The cartridge mount 420 is separated by a partition wall 160 from the main board 110 and the absorber mount 180 to prevent the ink absorbed in the waste ink absorber 150 from entering the main board 110 and the cartridge mount 180. The partition wall 160 also prevents the ink leaking from the ink cartridges 430 from entering the main board 110.

More specifically, behind the partition wall 160, the print unit mount 170 is positioned on the left side of a partition wall 450, while the absorber mount 180 is positioned on the right side of the partition wall 450. The partition wall 450 is interposed between the print unit mount 170 and the absorber mount 180 and extends from substantially the center of the partition wall 160 toward the rear of the printer 300 perpendicularly to the partition wall 160. The print unit mount 170 and the absorber mount 180 share the partition wall 450. The print unit mount 170 is formed by a top plane of the substrate 100 and the partition wall 450 continues to the top plane of the substrate 100. The print unit mount 170 is recessed on the lower side of the substrate 100. The absorber mount 180 is formed by a bottom plane of the substrate 100 and the partition wall 450 that continues to the bottom plane of the substrate 100. The absorber mount 180 is recessed on the upper side of the substrate 100.

In other words, the print unit mount 170 and the absorber mount 180 are recessed vertically in the opposite direction with respect to the partition wall 450 interposed therebetween. The cartridge mount 420 and the print unit mount 170 are formed into a stepped shape. The cartridge mount 420 and the absorber mount 180 are separated by the partition wall 160 interposed therebetween, and the cartridge mount 420 is substantially level with the bottom surface of the absorber mount 180. The print unit 140 is mounted on the print unit mount 170, the waste ink absorber 150 is mounted on the absorber mount 180, and the main board 11 is mounted under the print unit mount 170.

As shown in FIG. 15, in the ink-jet printer 3, the ink cartridges 430, the main board 110 that controls operation of the multi-function device 101, a network control unit board (hereinafter referred to as "NCU board") 120 that controls a connection between a facsimile (not shown) and a telephone line, a power supply board 130, the print unit 140, the waste ink absorber 150 that absorbs ink waste in the print unit 140 are mounted on the substrate 100. These components 430, 110, 120, 130, 150 except for the print unit 140 are mounted on the substrate so as not to overlap one another as viewed from the height direction, that is, in the plan view of FIG. 15.

More specifically, the main board 110 and the waste ink absorber 150 are disposed directly behind the four ink cartridges 430 (directly above the four ink cartridges 430 in FIG. 15) inserted from the front (lower side in FIG. 4) of the printer 300. The main board 110 and the waste ink absorber are disposed on the left and right, respectively. The main board 110 has a substantially rectangular shape that extends nearly to the rear end of the printer 300. The waste ink absorber has a substantially rectangular shape that extends toward the rear of the printer 300 by half the length of the main board 110. The NCU board 120 and the power supply board 130 are disposed directly behind the waste ink absorber. The NCU board 120 is disposed next to the main board 110, and the power supply board 130 is disposed on the opposite side of the NCU board 120 from the main board 110.

The print unit 140 is disposed on the main board 110 and the waste ink absorber 150 to partially cover the main board 110 and entirely cover the waste ink absorber 150. The tubes 440 each connected to one of the ink cartridges 430 are connected to the printhead (not shown) in the print unit 140 to supply ink from the ink cartridges 430 to the printhead. The ink supplied to the printhead is ejected from the nozzles of the printhead onto the sheet. Each of the tubes 440 extend from the corresponding needle that penetrates the rear side face 430b of the corresponding ink cartridge 430. The tubes 440 are bundled in pairs, and one pair is directed rightward and the other pair is directed leftward so as not to interfere with the sheet transport path 750. Thereafter, each pair of the tubes 440 is directed upward and then inward, and finally drawn into the printhead. The sheet transport path 750 passes through the print unit 140, and the printhead located above the sheet transport path 750 ejects ink onto the sheet to perform printing.

As described above, the ink cartridges 430, the main board 110, and the waste ink absorber 150 are mounted in the same plane so as not to overlap one another in the height direction. In addition, these components are designed to effectively use the area of the scanner 500 and to be relatively large in area and relatively small in thickness. Accordingly, the vertical dimension, that is, the thickness of the printer 3 is reduced. Further, these components are designed to have such an area that is mostly covered by the scanner 500 when it is placed over the printer 300. Thus, the area of the print unit 140 is reduced to a minimum area that is required by the flat bed scanner 500. Ultimately, the multi-function device 101 is made compact.

By placing the cover 200 over the substrate 100 after mounting all the components thereon as described above, the ink-jet printer 300 shown in FIG. 13 is obtained. At this time, as shown in FIG. 17, the upper surfaces of the ink cartridges 430 are substantially level with the upper surface of the waste ink absorber 150. Accordingly, the waste ink absorbing capacity of the waste ink absorber 150 is adjusted according to the size (capacity) of the ink cartridge 430. In addition, the lower surface of the print unit 140 and the upper surface of the waste ink absorber are close to each other, while the upper surfaces of the ink cartridges 430 are substantially level with the upper surface of the waste ink absorber 15. Thus, the print unit 140, the waste ink absorber 150, and the ink cartridges 430 are disposed with the least wasted space while creating storage space for the sheets discharged from the print unit 140. The storage space allows a sheet having passed the discharge roller to drop downward from the sheet transport path and to stay there without being pushed out by a subsequently discharged sheet.

Further, because the ink cartridges 430 are disposed under the discharge portion 270, the water head difference between the nozzle surface of the printhead and the ink surface in each ink cartridge 430 are adjusted suitably for ejection of a desired amount of ink from the nozzle surface. In addition, because the ink cartridges 430, which are small in the vertical dimension, are arranged side by side, variations in the water head difference are minimized regardless of the amount of ink consumed. Accordingly, a negative pressure is applied to the printhead stably from the initial use of ink in the ink cartridge 430 till the exhaustion of ink, thereby lessening the influence of the remaining ink on the ejection performance of the printhead.

As described above, in the multi-function device 101 according to the second embodiment, the ink cartridges 430 storing ink are of low profile and disposed under the discharge portion 270 of the sheets. Thus, the ink-jet printer 300 is made thin, and the area of the ink-jet printer 300 perpendicular to the thickness direction is reduced. In addition, because the ink cartridges 430 are arranged side by side horizontally without increasing the thickness of the printer 30, the printer 300 is made thin. Further, because the ink cartridges 430 are removable from the front of the printer 300, they can be easily removed from the printer 300.

The ribs 250 are provided on the upper surfaces 430a of the ink cartridges 430 to project toward the discharge portion 270, and the sheets discharged from the discharge portion 270 are guided over the ribs 250 to the outside. Because there is no need to provide an output tray, the ink-jet printer 3 is made compact and simple in structure.

In addition, the partition wall 160, which separate the ink cartridges 430 from the main board 110 and the waste ink absorber 150, prevents the ink, when there are leaks from the ink cartridges 430, from entering the main board 110. The partition wall 160 also prevents the ink waste from flowing toward the ink cartridges 430. Another partition wall 450, which separates the waste ink absorber 150 from the main board 110, prevents the ink waste from entering the main board 110. Further, because the upper surfaces of the ink cartridges 430 are substantially level with the upper surface of the waste ink absorber 150, the ink waste absorbing capacity of the waste ink absorber 150 is adjusted according to the size (capacity) of the ink cartridge 430.

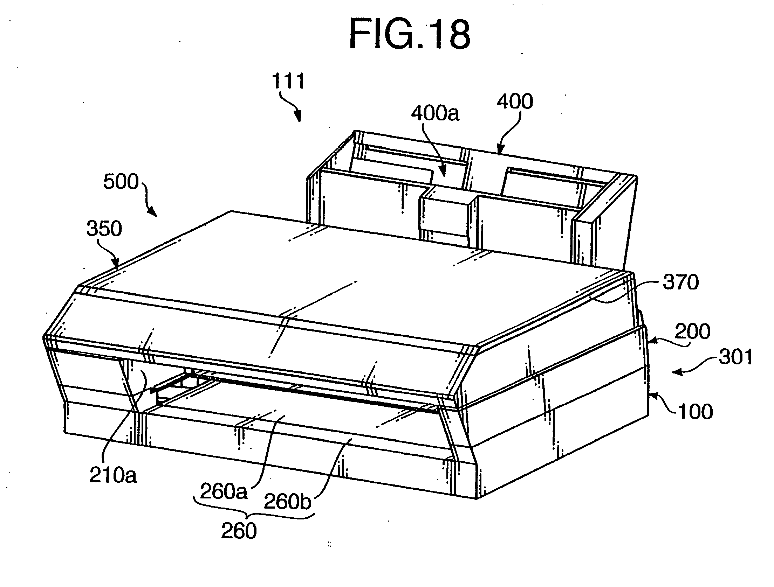

A multi-function device 111 according to a third embodiment of the invention will now be described with reference to FIGS. 18 through 23. The multi-function device 111 of the third embodiment has basically the same structure as the multi-function device 101 of the second embodiment except that an ink-jet printer 301 is provided with an output tray 271 and media boards 800, 810. In the third embodiment, the same elements as those in the second embodiment are labeled with the same numbers, and the elements already described in the second embodiment will not be described repeatedly. The structure of a scanner 500 and the positional relationship of drive motors provided for the printer 301 will be described in detail herein.

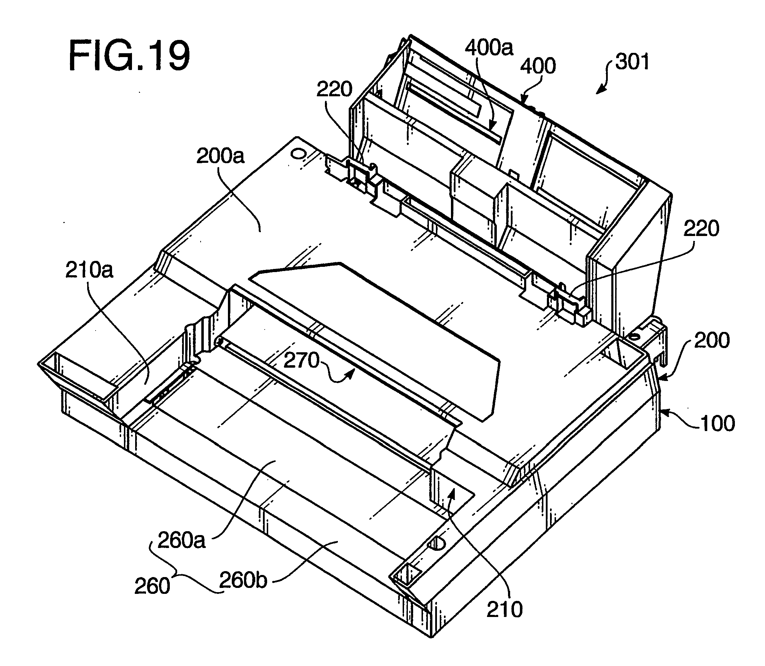

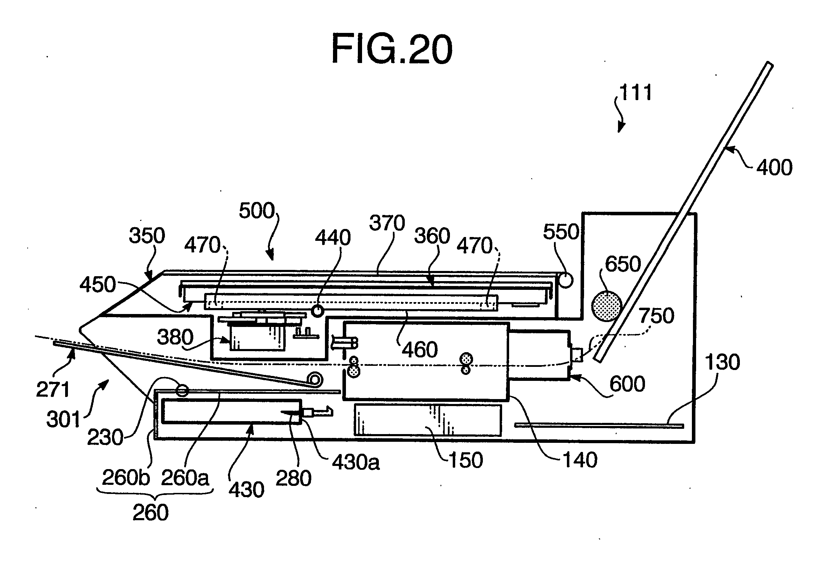

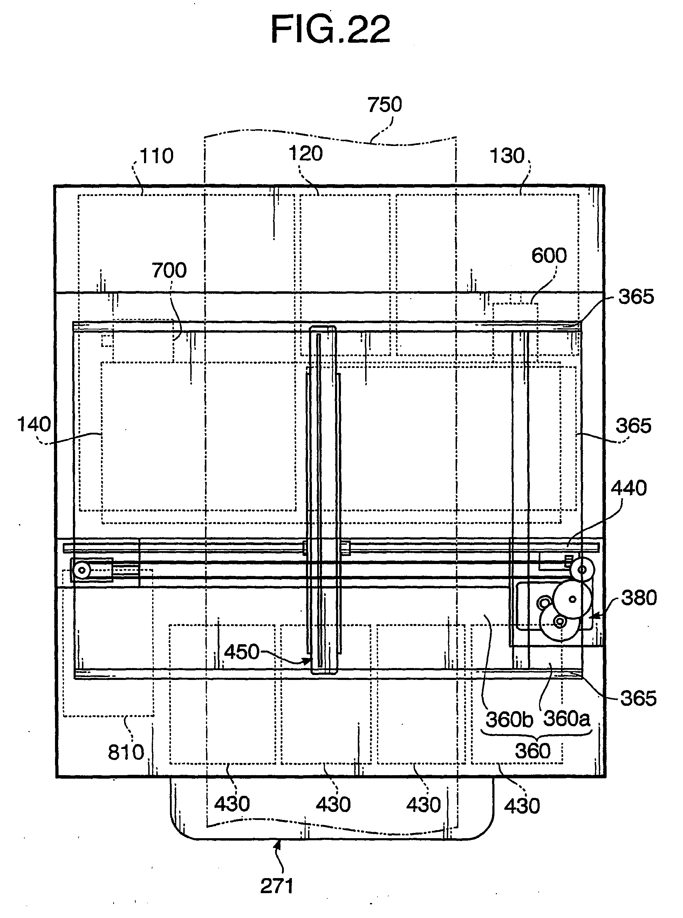

As shown in FIG. 19, four ink cartridges 430 (FIG. 22) mounted at the front of a substrate 100 of the multi-function device 111 are covered by a cover 260 entirely. The cover 260 includes a first cover 260a disposed immovably over the four ink cartridges 430 and a second cover 260b disposed pivotally about a pivot shaft 230 (FIG. 20) provided at the front edge of the first cover 260a.

In addition, as shown in FIG. 20, the output tray 271 is disposed downstream of a discharge portion 270 with respect to a sheet transport direction on a sheet transport path 750. The output tray 271 is omitted from FIGS. 18 and 19. As shown in FIG. 20, the output tray 271 is attached to the periphery of a cut-away portion 210 while leaving little clearance to a left wall 210a and a right wall (invisible). The output tray 271 is disposed over the ink cartridges 430 with its downstream end (left end in FIG. 20) tilted upward.

A print unit 140, which has substantially the same structure as the print unit 140 of the first embodiment, is disposed at a position between the sheet feed tray 400 and the output tray 271 to partially overlap the sheet transport path 750 shown by a dash-double-dot line. In the print unit 140, a carriage motor 600 is provided to drive a carriage to reciprocate in the right-left direction. The carriage motor 600 is attached externally to the rear of the print unit 140 with its shaft directed frontward and without extending from the upper and lower ends of the print unit 140.

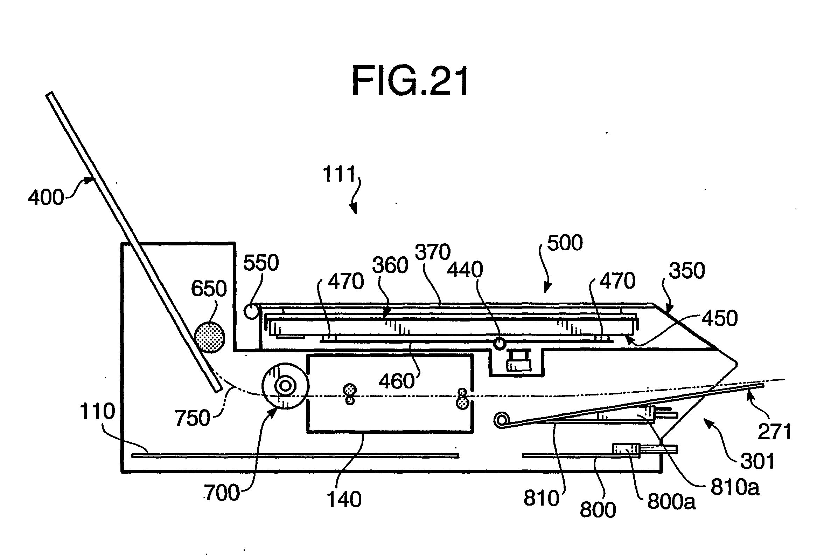

As shown in FIGS. 21 and 22, a sheet feed motor 700 is provided at a position over a main board 110 and directly behind the print unit 140 with its shaft directed leftward and without extending from the upper and lower ends of the print unit 140. The sheet feed motor 140 feeds a sheet into the printer 301, transports it along the sheet transport path 750, and discharges the sheet from the discharge portion 270 onto the output tray 271. A low-noise motor that is capable of driving at high speed is used as the sheet feed motor 700.

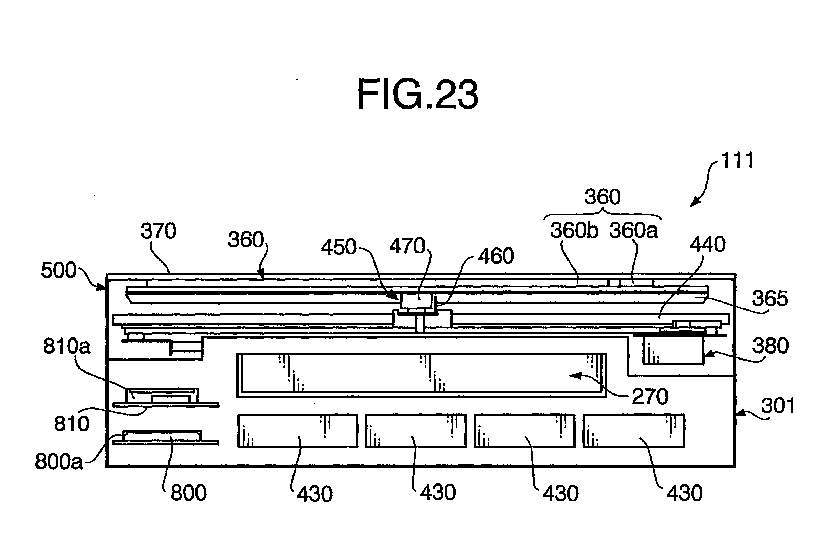

The structure of the scanner 500 will now be described with reference to FIGS. 20 through 23. FIGS. 20 and 21 are right and left side views of the multi-function device 111, respectively. FIG. 22 is a schematic plan view showing a layout of components of the multi-function device 111, and FIG. 23 is a front view of the multi-function device 111. As shown in FIGS. 20 and 21, the scanner 500 has a flatbed reader 350 disposed pivotally with respect to the printer 301, and the flatbed reader 350 is provided with a document glass 360 on which a document is placed with its characters facing down. The document glass 360 is covered with a cover 370 pivotally disposed thereon, and a contact image sensor 450 is disposed directly under the document glass 360 to read the characters of the document on the document glass 360. The scanner 500 is provided with an automatic sheet feeder (not shown), and the document glass 360 includes a small first glass 360a and a large second glass 360b that contact the character surface of the document fed from the automatic sheet feeder. The first and second glasses 360a, 360b are placed side by side perpendicularly to the document transport direction (vertical direction in FIG. 22), and connected at their underside by guide rails 365 extending across the first and second glasses 360a. 360b.

As shown in FIGS. 20 through 23, the contact image sensor 450 extends in the right-left direction in FIGS. 20 and 21 and is driven by a drive motor 380 disposed under the right side of the scanner 500 in the plan view (FIG. 22) to scan along a shaft 440 extending in the right-left direction in FIG. 22. More specifically, the drive motor 380 is disposed under the contact image sensor 450 and the document glass 360 in the extra space created above the ink cartridges 430. The drive motor 380 and the print unit 140 are arranged horizontally such that the drive motor 380 partially overlaps the print unit 140 in the height direction. A step motor or a hybrid motor that are suitable for positional control of the image sensor 450 are used as the drive motor 380. The image sensor 450 is supported by a base member 460 disposed directly under the image sensor 450, and the image sensor 450 is movable together with the base member 460 along the shaft 440. The base member 460 extends in the right-left direction in FIGS. 20 and 21 similar to the image sensor 450, and urge members 470 are provided near both ends of the base member 460. As a result, the image sensor 450 scans along the shaft 440 while contacting, at both ends, the guide rails 365 that link the first and second glasses 360a, 360b and being spaced equidistantly from the document glass 360.

As shown in FIGS. 21 through 23, a plurality of media boards 800, 810 having connectors 800a, 810a are provided on the left side of the discharge portion 270 of the printer 301 in the front view (FIG. 23) of the multi-function device 111. External memory media, such as a COMPACTFLASH (trademark of Sandisk Corporation), a SMARTMEDIA (trademark of Toshiba), and a MEMORY STICK (trademark of Sony), are inserted to the connectors 800a, 810a. More specifically, two media boards 800, 810 are provided on the opposite side of the discharge portion 270 from the drive motor 380 of the image sensor 450. The media board 800 having the connector 800a and formed with a slot for a COMPACTFLASH, which is widest, is provided at the bottom, and the media board 810 having a connector 810a and formed with slots for a SMARTMEDIA and a MEMORY STICK are provided above the media board 800. The media boards 800, 810, each of which lies horizontally, are arranged to be stacked vertically.

By inserting external memory media to the connectors 800a, 810a, image data read by the scanner 500 can be stored in the external memory media, or data stored in the external memory media can be printed on the sheet using the printer 301. A COMPACTFLASH, which is widest, and a MEMORY STICK, which is narrowest and longest, and a SMARTMEDIA, which is thinnest and wider than a MEMORY STICK, are inserted, from the bottom to the top, to the connectors 800a, 810a. In other words, these external memory media are inserted in increasing order of surface area from the top to the bottom. Thus, which external memory medium is inserted can be easily checked when viewed from the top of the multi-function device 111. In addition, the media boards 800, 810, which extend substantially horizontally, allow the user to see the label surface of the media and insert the media with the right side up. Thus, the external memory media can be inserted to and removed from the media boards 800, 810 easily and reliably.

As shown in FIG. 22, the drive motor 380 of the image sensor 450 and the main board 110 are placed along the diagonal line from the upper left corner to the lower right corner of the substrate 100 in the plan view of the multi-function device 111. Because the drive motor 380 and the main board 110 are placed as far away as possible from each other in the multi-function device 111, the main board 110 is less likely to be affected by the noise caused by the rotation of the drive motor 380. In addition, the carriage motor 600 for moving the carriage (not shown), the sheet feed motor 700 for feeding sheets into the printer 301, and the drive motor 380 for moving the image sensor 450 are placed away from one another with their shafts directed in different directions. Thus, these drive motors 600, 700, 380, which require relatively large space, can be fitted into a limited space in the compact multi-function device 111. Further, the relatively heavy motors 600, 700, 380, which are placed away from one another, give the multi-function device 111 a good weight balance and a stable condition.

As described above, in the multi-function device 111 according to the third embodiment of the invention, the drive motor 380 for moving the image sensor 450 of the scanner 500 and the print unit 140 of the ink-jet printer 301 are arranged horizontally while the image sensor 450 partially overlaps the print unit 140 in the height direction. The carriage motor 600 and the sheet feed motor 700 are attached externally to the rear of the print unit 140 without extending from the upper and lower ends of the print unit 140. Because the print unit 140 and the motors 380, 600, 700 occupy minimum space in the height direction, the printer 301 is made thin and compact. In addition, the ink cartridges 430 are disposed under the drive motor 380 and the discharge portion 270, and the components of the printer 301 are placed in the extra space between the ink cartridges 430 and the scanner 500. Thus, the multi-function device 111 is made thin and compact.

In addition, the carriage motor 600, the sheet feed motor 700, and the drive motor 380 for moving the image reader 450, which require a relatively large space, are spaced away from one another and fitted into limited space. Thus, functions of the scanner 500 as well as the printer 301 can be accomplished in the multi-function device 111 having a compact body.

Further, because the main board 110 mounted on the substrate 100 and the drive motor 380 for moving the image sensor 450 are placed away from each other in the multi-function device 111, the main board 110 is less likely to be affected by the noise caused by the rotation of the drive motor 380.

Further, the drive motor 380 for moving the image sensor 450 is disposed on one side of the sheet discharge portion 270, and the media boards 800, 810 having connectors to which external memory media are detachably inserted are disposed on the other side of the discharge portion 270. Extra space on both sides of the discharge portion 270 is effectively used to make the printer 301 thin and compact.

Unless no positional and structural constraints are introduced by other members, the media boards 800, 810 may be disposed on the right side of the discharge portion 270 while the drive motor 380 for moving the image sensor 450 may be disposed on the left side thereof, in the front view of the multi-function device 111. Although each of the media boards 800, 810 is arranged to lie horizontally, each of them may be arranged to extend vertically. The layout of various boards may also be changed as desired from the one shown in the third embodiment.

One or more features of the invention described in the above-described embodiments can be applied, in combination, to the ink-jet printer to make its body as thin and compact as possible. For example, in the ink-jet printer, the maintenance mechanism is attached to the bottom of the print unit while the drive motor of the maintenance mechanism is attached to the rear of the print unit as described in the first embodiment, and the components, such as the print unit, main board, waste ink absorber, and ink cartridges, are arranged on the substrate with the least wasted space as described in the second embodiment, and the drive motor of the scanner, the carriage motor and the sheet feed motor of the printer are arranged away from one another while saving the vertical space of the printer. By incorporating all the space-saving features of the invention into the ink-jet printer, the ink-jet printer and the multi-function device including the ink-jet printer are made thin and compact effectively.

While the invention has been described with reference to the specific embodiments, the description of the embodiments is illustrative only and is not to be construed as limiting the scope of the invention. Various other modifications and changes may be occur to those skilled in the art without departing from the scope of the invention as claimed.

## Claims

1. A printing device, comprising:
a scanner (500) that reads an image of a document;
a sheet transport path (750) along which a recording sheet is transported;
a print unit (140) including a printhead that ejects ink onto the recording sheet;
a discharge portion (270) from which the recording sheet with the ink ejected thereon is discharged;
a storage space provided at a downstream side of the discharge portion (270) in a sheet transport direction for storing the recording sheet discharged from the discharge portion (270); and
at least one ink cartridge (430) that stores ink to be supplied to the printhead, wherein the scanner (500) extends over the discharge portion (270) and the storage space, and the at least one ink cartridge is disposed at a lower position than the discharge portion (270) and the storage space.

2. The printing device according to claim 1, further comprising:
a guide portion provided on the sheet transport path (750), at the downstream side of the discharge portion (270) in the sheet transport direction, to guide the recording sheet discharged from the discharge portion (270).

3. The printing device according to claim 1, further comprising:
an output tray (271) disposed on the sheet transport path, at the downstream side of the discharge portion (270) in the sheet transport direction, to receive the recording sheet discharged from the discharge portion (270).

4. The printing device according to claim 1, further comprising:
a waste ink absorber (150) that absorbs ink waste produced from ink supplied from the at least one ink cartridge (430) to the printhead; and
a main board (110) that controls an operation of the printing device, wherein the at least one ink cartridge (430), the waste ink absorber (150), and the main board (110) are placed without overlapping one another in a plan view of the printing device, and an upper surface of the at least one ink cartridge (430) is substantially level with an upper surface of the waste ink absorber (150).

5. The printing device according to claim 4, wherein the scanner (500) covers substantially all of the at least one ink cartridge (430), the print unit (140), the waste ink absorber (150), and the main board (110), from above.

6. The printing device according to claim 4, further comprising:
a substrate (100) on which the at least one ink cartridge (430), the print unit (140), the waste ink absorber (150), and the main board (110) are mounted.

7. The printing device according to claim 6, wherein the substrate (100) is formed with a partition wall (160) that separates the at least one ink cartridge (430) from the main board (110) and the waste ink absorber (150), and formed with another partition wall (450) that separates the main board (110) from the waste ink absorber (150).

8. The printing device according to claim 6, wherein the substrate (100) is recessed vertically in opposite directions to accommodate the main board (110) and the waste ink absorber (150) on opposite sides of the substrate (100), and the print unit (140) overlies the main board (110) and the ink absorber (150) .

9. The printing device according to claim 1, wherein the at least one ink cartridge (430) is of low profile and has a relatively large area in a direction perpendicular to a vertical direction of the at least one ink cartridge (430) and has a relatively small vertical dimension.

10. The printing device according to claim 9, wherein the at least one ink cartridge ((430) is removable from a front side of the printing device.

11. The printing device according to claim 1, wherein the at least one ink cartridge (430) includes a plurality of ink cartridges (430) arranged side by side horizontally.

12. The printing device according to claim 1, wherein the scanner (500) includes a document reading sensor (450) and a sensor drive motor (380) that drives the document reading sensor (450), and the sensor drive motor (380) is disposed at a lower position than the scanner (500), on one side of the discharge portion (270) in direction perpendicular to the sheet transport direction.

13. The printing device according to claim 12, wherein the sensor drive motor (380) and the print unit (140) are arranged side by side horizontally in a side view of the printing device such that the sensor drive motor (380) and the print unit (140) partially overlap each other in a vertical direction.

14. The printing device according to claim 12, further comprising at least one media board (800) having a connector (800a) to which an external memory medium is detachably inserted, wherein the at least one media board (800) is disposed at a lower position than the scanner (500) on the other side of the discharge portion ((270).

15. The printing device according claim 14, wherein the external memory medium is detachably inserted to the connector (800a) of at least one media board (800) from a front side of the printing device.

16. The printing device according to claim 14, wherein the at least one media board (800, 810) includes a plurality of media boards, and connectors (800a, 810a) of the media boards, each lying horizontally, are stacked vertically.

17. The printing device according to claim 14, wherein image data read by the scanner (500) is stored in the external memory medium, or image data to be printed on the recording sheet is stored in the external memory medium.

18. The printing device according to claim 14, wherein the connectors (800a, 810a) of the media boards (800, 800a) are arranged from top bottom in increasing order of surface area of the media boards (800, 800a).

19. The printing device according to claim 12, further comprising:
a main board (110) that controls an operation of the printing device; and
a waste ink absorber (150) that absorbs ink waste produced from the ink supplied from at least one ink cartridge (430) to the printhead, wherein the main board (110) and the sensor drive motor (380) are opposed to each other in a direction diagonally crossing the sheet transport path (750), and the waste ink absorber (150) and an at least one media board (800) are opposed to each other perpendicularly to the opposing direction of the main board (110) and the sensor drive motor (380) .

20. The printing device according to claim 12, wherein the print unit (140) further includes:
a carriage (11) on which the printhead (10) is mounted;
a carriage motor (60) that moves the carriage (11) perpendicularly to the sheet transport path (750); and
a sheet feed motor (70) that feeds the recording sheet into the print unit (140); wherein the sheet feed motor (70), the carriage motor (60), and the sensor drive motor (380) are disposed away from one another with their shafts directed in different directions.

21. The printing device according to claim 12, wherein the sheet feed motor (70) and the carriage motor (60) are disposed on opposite sides with respect to a carriage moving direction, at upstream positions of the sheet transport path (750) with respect to the sheet transport direction.

22. The printing device according to claim 1, further comprising:
a maintenance mechanism (16) including a wiper (80) that wipes a printhead face, a cap (81) that hermetically seals nozzles of the printhead (10), and a drive motor (82) that drives the wiper (80) and the cap (81), wherein the drive motor (82) of the maintenance mechanism (16) is disposed externally to the print unit (140) with its shaft directed downwardly and without extending upper and lower ends of the print unit (140).

23. The printing device according to claim 22, a bottom panel (21a) of the print unit (140) is formed with an opening (21c) at a position corresponding to the maintenance mechanism (16), and the wiper (80) and the cap (81) project through the opening (21c) into the print unit (140).

24. The printing device according to claim 23, wherein the maintenance mechanism (16) further includes mounting plate (84) on which the wiper (80), the cap (81), and the drive motor (82) are mounted, and the mounting plate (84) is fixed to the bottom panel (21a) of the print unit (140) such that a portion of the mounting plate (84) on which the drive motor (82) is mounted extends outward from the print unit.

25. The printing device according to claim 1, wherein the recording sheet is discharged from the discharge portion (270) along the sheet transport path (750) toward a front side of the printing device.

26. The printing device according to claim 1, further comprising an operation panel (6) for operating the printing device, the operation panel (6) being disposed on an upper surface of the scanner (500) at a front side of the printing device.

## Patentansprüche

1. Druckvorrichtung mit:
einem Scanner (500), der ein Bild eines Dokumentes liest; einem Blatttransportpfad (750), entlang dem ein Aufzeichnungsblatt transportiert wird;
einer Druckeinheit (140) mit einem Druckkopf, der Tinte auf das Aufzeichnungsblatt ausstößt;
einem Ausgabeabschnitt (270), aus dem das Aufzeichnungsblatt mit der darauf ausgestoßenen Tinte ausgegeben wird;
einem Speicherraum, der auf einer stromabwärtigen Seite des Ausgabeabschnittes (270) in einer Blatttransportrichtung vorgesehen ist, zum Speichern des von dem Ausgabeabschnitt (270) ausgegebenen Aufzeichnungsblattes; und
mindestens einer Tintenpatrone (430), die zu dem Druckkopf zu liefernde Tinte speichert, worin der Scanner (500) sich über dem Ausgabeabschnitt (270) und dem Speicherraum erstreckt und
die mindestens eine Tintenpatrone an einer niedrigeren Position als der Ausgabeabschnitt (270) und der Speicherraum vorgesehen ist.

2. Druckvorrichtung nach Anspruch 1, weiter mit:
einem Führungsabschnitt, der auf dem Blatttransportpfad (750) an der stromabwärtigen Seite des Ausgabeabschnittes (270) in der Blatttransportrichtung zum Führen des von dem Ausgabeabschnitt (270) ausgegebenen Aufzeichnungsblattes vorgesehen ist.

3. Druckvorrichtung nach Anspruch 1, weiter mit:
einem Ausgabetrog (271), der auf dem Blatttransportpfad an der stromabwärtigen Seite des Ausgabeabschnittes (270) in der Blatttransportrichtung vorgesehen ist, zum Aufnehmen des von dem Ausgabeabschnitt (270) ausgegebenen Aufzeichnungsblattes.

4. Druckvorrichtung nach Anspruch 1, weiter mit:
einem Abfalltintenabsorbierer (150), der Abfalltinte absorbiert, die von der mindestens einen Tintenpatrone (430) zu dem Druckkopf geliefert wird; und
einer Hauptplatine (110), die eine Tätigkeit der Druckvorrichtung steuert, worin die mindestens eine Tintenpatrone (430), der Abfalltintenabsorbierer (150) und die Hauptplatine (110) ohne miteinander zu überlappen in einer Draufsicht der Druckvorrichtung angeordnet sind und eine obere Oberfläche der mindestens einen Tintenpatrone (430) im wesentlichen auf dem gleichen Niveau wie eine obere Oberfläche des Abfalltintenabsorbierers (150) ist.

5. Druckvorrichtung nach Anspruch 4, bei der der Scanner (500) im wesentlichen alle der mindestens einen Tintenpatrone (430), der Druckeinheit (140), des Abfalltintenabsorbierers (150) und der Hauptplatine (110) von oben bedeckt.

6. Druckvorrichtung nach Anspruch 1, weiter mit:
einem Substrat (100), auf dem die mindestens eine Tintenpatrone (430), die Druckeinheit (140), der Abfalltintenabsorbierer (150) und die Hauptplatine (110) angebracht sind.

7. Druckvorrichtung nach Anspruch 6, bei der das Substrat (100) mit einer Trennwand (160), die die mindestens eine Tintenpatrone (430) von der Hauptplatine (110) und dem Abfalltintenabsorbierer (150) trennt, und mit einer anderen Trennwand (450), die die Hauptplatine (110) von dem Abfalltintenabsorbierer (150) trennt, gebildet ist.

8. Druckvorrichtung nach Anspruch 6, bei der das Substrat (100) in entgegengesetzte Richtungen zum Aufnehmen der Hauptplatine (110) und des Abfalltintenabsorbierers (150) auf entgegengesetzten Seiten des Substrates (100) vertikal ausgenommen ist und die Druckeinheit (140) über der Hauptplatine (110) und dem Abfalltintenabsorbierer (150) liegt.

9. Druckvorrichtung nach Anspruch 1, bei der die mindestens eine Tintenpatrone (430) von flacher Bauform ist und eine relativ große Fläche in einer Richtung senkrecht zu einer vertikalen Richtung der mindestens einen Tintenpatrone (430) aufweist und eine relativ kleine vertikale Abmessung aufweist.

10. Druckvorrichtung nach Anspruch 9, bei der die mindestens eine Tintenpatrone (430) aus einer Vorderseite der Druckvorrichtung entfernbar ist.

11. Druckvorrichtung nach Anspruch 1, bei der die mindestens eine Tintenpatrone (430) eine Mehrzahl von Tintenpatronen (430) enthält, die Seite an Seite horizontal angeordnet sind.

12. Druckvorrichtung nach Anspruch 1, bei der der Scanner (500) einen Dokumentlesesensor (450) und einen Sensorantriebsmotor (380) enthält, der den Dokumentenlesesensor (450) antreibt, und der Sensorantriebsmotor (380) an einer niedrigeren Position als der Scanner (500) auf einer Seite des Ausgabeabschnittes (270) in einer Richtung senkrecht zu der Blatttransportrichtung vorgesehen ist.

13. Druckvorrichtung nach Anspruch 12, bei der der Sensorantriebsmotor (380) und die Druckeinheit (140) Seite an Seite horizontal in einer Seitenansicht der Druckvorrichtung derart angeordnet sind, daß der Sensorantriebsmotor (380) und die Druckeinheit (140) teilweise einander in einer vertikalen Richtung überlappen.

14. Druckvorrichtung nach Anspruch 12, weiter mit mindestens einer Medienplatte (800) mit einem Verbinder (800a), in den ein externes Speichermedium abnehmbar eingeführt ist, worin die mindestens eine Medienplatte (800) an einer niedrigeren Position als der Scanner (500) auf der anderen Seite des Ausgabeabschnittes (270) vorgesehen ist.

15. Druckvorrichtung nach Anspruch 14, bei der das externe Speichermedium abnehmbar in den Verbinder (800a) der mindestens einen Medienplatte (800) von einer Vorderseite der Druckvorrichtung eingeführt ist.

16. Druckvorrichtung nach Anspruch 14, bei der die mindestens eine Medienplatte (800, 810) eine Mehrzahl von Medienplatten und Verbinder (800a, 810a) der Medienplatten enthält, wobei jede horizontal liegt, die vertikal gestapelt sind.

17. Druckvorrichtung nach Anspruch 14, bei der von dem Scanner (500) gelesene Bilddaten in dem externen Speichermedium gespeichert sind oder auf das Aufzeichnungsblatt zu druckende Bilddaten in dem externen Speichermedium gespeichert sind.

18. Druckvorrichtung nach Anspruch 14, bei der die Verbinder (800a, 810a) der Medienplatten (800, 800a) von oben nach unten in zunehmender Reihenfolge der Oberflächenfläche der Medienplatten (800, 800a) angeordnet sind.

19. Druckvorrichtung nach Anspruch 12, weiter mit:
einer Hauptplatine (110), die einen Betrieb der Druckvorrichtung steuert; und
einem Abfalltintenabsorbierer (150), der Abfalltinte absorbiert, die aus der Tinte erzeugt ist, die von der mindestens einen Tintenpatrone (430) zu dem Druckkopf geliefert ist, worin die Hauptplatine (110) und der Sensorantriebsmotor (380) einander gegenüber in einer Richtung diagonal quer über den Blatttransportpfad (750) sind und der Abfalltintenabsorbierer (150) und die mindestens eine Medienplatte (800) einander senkrecht zu der einander gegenüberliegenden Richtung der Hauptplatine (110) und des Sensorantriebsmotors (380) sind.

20. Druckvorrichtung nach Anspruch 12, bei der die Druckeinheit (140) weiter enthält:
einen Schlitten (11), auf dem der Druckkopf (10) angebracht ist;
einen Schlittenmotor (60), der den Schlitten (11) senkrecht zu dem Blatttransportpfad (750) bewegt; und
einen Blattvorschubmotor (70), der das Aufzeichnungsblatt in die Druckeinheit (140) vorschiebt;
worin der Blattvorschubmotor (70), der Schlittenmotor (60) und der Sensorantriebsmotor (380) voneinander entfernt vorgesehen sind, wobei ihre Wellen in verschiedene Richtungen zeigen.

21. Druckvorrichtung nach Anspruch 12, bei der der Blattvorschubmotor (70) und der Schlittenmotor (60) auf gegenüberliegenden Seiten in Bezug auf eine Schlittenbewegungsrichtung an stromaufwärtigen Positionen des Blatttransportpfades (750) in Bezug auf die Blatttransportrichtung vorgesehen sind.

22. Druckvorrichtung nach Anspruch 1, weiter mit:
einem Wartungsmechanismus (16) mit einem Wischer (80), der eine Druckkopffläche wischt, einer Kappe (81), die hermetisch die Düsen des Druckkopfes (10) abdichtet, und einem Antriebsmotor (82), der den Wischer (80) und die Kappe (81) antreibt, worin der Antriebsmotor (82) des Wartungsmechanismus (16) extern zu der Druckeinheit (140) vorgesehen ist, wobei seine Welle nach unten gerichtet ist, und ohne sich erstreckende obere und untere Enden der Druckeinheit (140).

23. Druckvorrichtung nach Anspruch 22, worin eine Bodentafel (21a) der Druckeinheit (140) mit einer Öffnung (21c) an einer Position entsprechend dem Wartungsmechanismus (16) gebildet ist und der Wischer (80) und die Kappe (81) durch die Öffnung (21c) in die Druckeinheit (140) vorstehen.

24. Druckvorrichtung nach Anspruch 23, bei der der Wartungsmechanismus (16) weiter eine Anbringungsplatte (84) enthält, auf der der Wischer (80), die Kappe (81) und der Antriebsmotor (82) angebracht sind, und die Anbringungsplatte (84) an der Bodenplatte (21a) der Druckeinheit (140) derart befestigt ist, daß ein Abschnitt der Anbringungsplatte (84), auf der der Antriebsmotor (82) angebracht ist, sich nach außen von der Druckeinheit erstreckt.

25. Druckvorrichtung nach Anspruch 1, bei der das Aufzeichnungsblatt aus dem Ausgabeabschnitt (270) entlang des Blatttransportpfades (750) zu einer Vorderseite der Druckvorrichtung ausgegeben wird.

26. Druckvorrichtung nach Anspruch 1, weiter mit einer Betätigungstafel (6) zum Betätigen der Druckvorrichtung, wobei die Betätigungstafel (6) auf einer oberen Oberfläche des Scanners (500) an einer Vorderseite der Druckvorrichtung vorgesehen ist.

## Revendications

1. Dispositif d'impression, comprenant :
un dispositif de balayage (500) qui lit une image d'un document ;
un trajet de transport de feuille (750) le long duquel une feuille d'enregistrement est transportée ;
une unité d'impression (140) comprenant une tête d'impression qui éjecte de l'encre sur la feuille d'enregistrement ;
une partie de décharge (270) à partir de laquelle la feuille d'enregistrement avec l'encre éjectée sur elle est déchargée ;
un espace de stockage prévu au niveau d'un côté en aval de la partie de décharge (270) dans une direction de transport de feuille afin de stocker la feuille d'enregistrement déchargée depuis la partie de décharge (270) ; et
au moins une cartouche d'encre (430) qui stocke l'encre devant être fournie à la tête d'impression, dans laquelle le dispositif de balayage (500) s'étend sur la partie de décharge (270) et l'espace de stockage et la au moins une cartouche d'encre est disposée au niveau d'une position inférieure à la partie de décharge (270) et l'espace de stockage.

2. Dispositif d'impression selon la revendication 1, comprenant en outre :
une partie de guidage prévue sur le trajet de transport de feuille (750) au niveau du côté en aval de la partie de décharge (270) dans la direction de transport de feuille, afin de guider la feuille d'enregistrement déchargée depuis la partie de décharge (270).

3. Dispositif d'impression selon la revendication 1, comprenant en outre :
un plateau de sortie (271) disposé sur le trajet de transport de feuille, au niveau du côté en aval de la partie de décharge (270) dans la direction de transport de feuille, afin de recevoir la feuille d'enregistrement déchargée depuis la partie de décharge (270).

4. Dispositif d'impression selon la revendication 1, comprenant en outre :
un absorbeur d'encre déchet (150) qui absorbe l'encre déchet produite à partir de l'encre fournie depuis la au moins une cartouche d'encre (430) vers la tête d'impression ; et
une carte principale (110) qui contrôle un fonctionnement du dispositif d'impression, dans lequel la au moins une cartouche d'encre (430), l'absorbeur d'encre déchet (150) et la carte principale (110) sont placés sans se chevaucher les uns les autres dans une vue en plan du dispositif d'impression, et une surface supérieure de la au moins une cartouche d'encre (430) est sensiblement à niveau avec une surface supérieure de l'absorbeur d'encre déchet (150).

5. Dispositif d'impression selon la revendication 4, dans lequel le dispositif de balayage (500) couvre sensiblement tout de la au moins une cartouche d'encre (430), l'unité d'impression (140), l'absorbeur d'encre déchet (150) et la carte principale (110) depuis le dessus.

6. Dispositif d'impression selon la revendication 4, comprenant en outre :
un substrat (100) sur lequel la au moins une cartouche d'encre (430), l'unité d'impression (140), l'absorbeur d'encre déchet (150) et la carte principale (110) sont montés.

7. Dispositif d'impression selon la revendication 6, dans lequel le substrat (100) est formé avec une paroi de séparation (160) qui sépare la au moins une cartouche d'encre (430) de la carte principale (110) et de l'absorbeur d'encre déchet (150) et formé avec une autre paroi de séparation (450) qui sépare la carte principale (110) de l'absorbeur d'encre déchet (150).

8. Dispositif d'impression selon la revendication 6, dans lequel le substrat (100) est évidé verticalement dans des directions opposées afin de loger la carte principale (110) et l'absorbeur d'encre déchet (150) sur des côtés opposés du substrat (100) et l'unité d'impression (140) repose sur la carte principale (110) et l'absorbeur d'encre (150).

9. Dispositif d'impression selon la revendication 1, dans lequel la au moins une cartouche d'encre (430) est de profil faible et a une zone relativement large dans une direction perpendiculaire à une direction verticale de la au moins une cartouche d'encre (430) et a une dimension verticale relativement petite.

10. Dispositif d'impression selon la revendication 9, dans lequel la au moins une cartouche d'encre (430) est amovible depuis un côté avant du dispositif d'impression.

11. Dispositif d'impression selon la revendication 1, dans lequel la au moins une cartouche d'encre (430) comprend une pluralité de cartouches d'encre (430) agencées côte à côte dans le sens horizontal.

12. Dispositif d'impression selon la revendication 1, dans lequel le dispositif de balayage (500) comprend un capteur de lecture de document (450) et un moteur d'entraînement de capteur (380) qui entraîne le capteur de lecture de document (450) et le moteur d'entraînement de capteur (380) est disposé au niveau d'une position inférieure au dispositif de balayage (500) sur un côté de la partie de décharge (270) dans la direction perpendiculaire à la direction de transport de feuille.

13. Dispositif d'impression selon la revendication 12, dans lequel le moteur d'entraînement de capteur (380) et l'unité d'impression (140) sont agencés côte à côte dans le sens horizontal dans une vue latérale du dispositif d'impression de telle sorte que le moteur d'entraînement de capteur (380) et l'unité d'impression (140) se chevauchent partiellement dans une direction verticale.

14. Dispositif d'impression selon la revendication 12, comprenant en outre au moins une carte de support (800) ayant un connecteur (800a) dans lequel un support de mémoire externe est inséré de manière amovible, dans lequel la au moins une carte de support (800) est disposée au niveau d'une position inférieure au dispositif de balayage (500) sur l'autre côté de la partie de décharge (270).

15. Dispositif d'impression selon la revendication 14, dans lequel le support de mémoire externe est inséré de manière amovible dans le connecteur (800a) de la au moins une carte de support (800) depuis un côté avant du dispositif d'impression.

16. Dispositif d'impression selon la revendication 14, dans lequel la au moins une carte de support (800, 810) comprend une pluralité de cartes de support et des connecteurs (800a, 810a) des cartes de support, se trouvant chacune horizontale, sont empilés verticalement.

17. Dispositif d'impression selon la revendication 14, dans lequel les données d'image lues par le dispositif de balayage (500) sont stockées dans le support de mémoire externe, ou les données d'image à imprimer sur la feuille d'enregistrement sont stockées dans le support de mémoire externe.

18. Dispositif d'impression selon la revendication 14, dans lequel les connecteurs (800a, 810a) des cartes de support (800, 800a) sont agencées de haut en bas dans l'ordre croissant de zone de surface des cartes de support (800, 800a).

19. Dispositif d'impression selon la revendication 12, comprenant en outre :
une carte principale (110) qui contrôle un fonctionnement du dispositif d'impression ; et
un absorbeur d'encre déchet (150) qui absorbe l'encre déchet produite à partir de l'encre fournie depuis la au moins une cartouche d'encre (430) vers la tête d'impression, dans lequel la carte principale (110) et le moteur d'entraînement de capteur (380) sont opposés l'un à l'autre dans une direction croisant dans le sens diagonal le trajet de transport de feuille (750) et l'absorbeur d'encre déchet (150) et une au moins une carte de support (800) sont opposés l'un à l'autre de manière perpendiculaire à la direction opposée de la carte principale (110) et du moteur d'entraînement de capteur (380).

20. Dispositif d'impression selon la revendication 12, dans lequel l'unité d'impression (140) comprend en outre :
un chariot (11) sur lequel la tête d'impression (10) est montée ;
un moteur de chariot (60) qui déplace le chariot (11) de manière perpendiculaire au trajet de transport de feuille (750) ; et
un moteur de fourniture de feuille (70) qui fournit la feuille d'enregistrement dans l'unité d'impression (140) ; dans lequel le moteur de fourniture de feuille (70), le moteur de chariot (60) et le moteur d'entraînement de capteur (380) sont disposés éloignés les uns des autres avec leurs arbres dirigés dans des directions différentes.

21. Dispositif d'impression selon la revendication 12, dans lequel le moteur de fourniture de feuille (70) et le moteur de chariot (60) sont disposés sur des côtés opposés par rapport à une direction de déplacement de chariot, au niveau de positions en amont du trajet de transport de feuille (750) par rapport à la direction de transport de feuille.

22. Dispositif d'impression selon la revendication 1, comprenant en outre :
un mécanisme d'entretien (16) comprenant un essuyeur (80) qui essuie une face de tête d'impression, un couvercle (81) qui scelle de manière hermétique des buses de la tête d'impression (10) et un moteur d'entraînement (82) qui entraîne l'essuyeur (80) et le couvercle (81), dans lequel le moteur d'entraînement (82) du mécanisme d'entretien (16) est disposé de manière externe à l'unité d'impression (140) avec son arbre dirigé vers le bas et sans étendre les extrémités supérieure et inférieure de l'unité d'impression(140).

23. Dispositif d'impression selon la revendication 22, dans lequel un panneau inférieur (21a) de l'unité d'impression (140) est formé avec une ouverture (21c) au niveau d'une position correspondant au mécanisme d'entretien (16) et l'essuyeur (80) et le couvercle (81) font saillie à travers l'ouverture (21c) dans l'unité d'impression (140).

24. Dispositif d'impression selon la revendication 23, dans lequel le mécanisme d'entretien (16) comprend en outre une plaque de montage (84) sur laquelle l'essuyeur (80), le couvercle (81) et le moteur d'entraînement (82) sont montés, et la plaque de montage (84) est fixée sur le panneau inférieur (21a) de l'unité d'impression (140) de telle sorte qu'une partie de la plaque de montage (84) sur laquelle le moteur d'entraînement (82) est monté s'étend vers l'extérieur depuis l'unité d'impression.

25. Dispositif d'impression selon la revendication 1, dans lequel la feuille d'enregistrement est déchargée depuis la partie de décharge (270) le long du trajet de transport de feuille (750) vers un côté avant du dispositif d'impression.

26. Dispositif d'impression selon la revendication 1, comprenant en outre un panneau de fonctionnement (6) destiné à opérer le dispositif d'impression, le panneau de fonctionnement (6) étant disposé sur une surface supérieure du dispositif de balayage (500) au niveau d'un côté avant du dispositif d'impression.
